# EUROPÄISCHE PATENTSCHRIFT

(11) **EP 4 149 910 B1**
(45) Veröffentlichungstag und Bekanntmachung des Hinweises auf die Patenterteilung: **27.12.2023**
(21) Anmeldenummer: 21743070.1
(22) Anmeldetag: 01.07.2021
(51) Int. Cl.: C04B 35/101, C04B 35/63, C04B 35/632, C04B 35/66

(54) **TROCKENSTOFFGEMISCH FÜR EINEN VERSATZ, VORZUGSWEISE FEUERBETONVERSATZ, ZUR HERSTELLUNG EINES GROBKERAMISCHEN FEUERFESTEN, NICHT-BASISCHEN ERZEUGNISSES, FEUERBETONVERSATZ UND DERARTIGES ERZEUGNIS SOWIE VERFAHREN ZU SEINER HERSTELLUNG, ZUSTELLUNG UND INDUSTRIEOFEN, RINNENTRANSPORTSYSTEM ODER MOBILES TRANSPORTGEFÄSS**
DRY MATERIAL MIXTURE FOR A BACKFILL, PREFERABLY A REFRACTORY CONCRETE BACKFILL, FOR PRODUCING A HEAVY-CLAY REFRACTORY NON-BASIC PRODUCT, REFRACTORY CONCRETE BACKFILL AND SUCH A PRODUCT, METHOD FOR PRODUCING SAME, LINING, AND INDUSTRIAL FURNACE, CHANNEL TRANSPORT SYSTEM OR MOBILE TRANSPORT VESSEL
MÉLANGE DE MATIÈRES SÈCHES POUR UN MÉLANGE, DE PRÉFÉRENCE UN MÉLANGE DE BÉTON RÉFRACTAIRE, DESTINÉ À LA FABRICATION D'UN PRODUIT NON BASIQUE RÉFRACTAIRE EN CÉRAMIQUE INDUSTRIELLE, MÉLANGE DE BÉTON RÉFRACTAIRE ET PRODUIT DE CE TYPE, AINSI QUE PROCÉDÉ POUR SA FABRICATION, GARNISSAGE ET FOUR INDUSTRIEL, SYSTÈME DE TRANSPORT À GOULOTTE OU CONTENANT DE TRANSPORT MOBILE

(30) Priorität: 01.07.2020 DE 102020208242
(43) Veröffentlichungstag der Anmeldung: 22.03.2023
(73) Patentinhaber: Refratechnik Holding GmbH, 80807 München (DE)
(72) Erfinder: NEESE, Jasper, 56566 Neuwied (DE); ROLLMANN, Steffen, 56637 Plaidt (DE); KESSELHEIM, Bertram, 56537 Bad Hönningen (DE)
(74) Vertreter: Dr. Solf & Zapf Patent- und Rechtsanwalts PartG mbB
(86) Internationale Anmeldenummer: PCT/EP2021/068257
(87) Internationale Veröffentlichungsnummer: WO 2022/003132

(56) Entgegenhaltungen:
- CN-A- 106 915 968
- CN-A- 109 265 182
- CN-A- 109 400 188
- DE-A1-102008 003 640
- US-A- 4 126 474
- US-B1- 6 447 596
- ADABIFIROOZJAEI ESMAEIL ET AL: "Effects of AlPO4 addition on the corrosion resistance of andalusite-based low-cement castables with molten Al-alloy", JOURNAL OF THE EUROPEAN CERAMIC SOCIETY., Bd. 33, Nr. 6, 1. Juni 2013 (2013-06-01), Seiten 1067-1075, XP055851851, GB ISSN: 0955-2219, DOI: 10.1016/j.jeurceramsoc.2012.11.005
- ESMAEIL ADABIFIROOZJAEI ET AL: "Effects of Different Calcium Compounds on the Corrosion Resistance of Andalusite-Based Low-Cement Castables in Contact with Molten Al-Alloy", METALLURGICAL AND MATERIALS TRANSACTIONS B, SPRINGER-VERLAG, NEW YORK, Bd. 42, Nr. 2, 11. Januar 2011 (2011-01-11), Seiten 400-411, XP019889187, ISSN: 1543-1916, DOI: 10.1007/S11663-010-9468-Z

## Beschreibung

Die vorliegende Erfindung betrifft ein Trockenstoffgemisch für einen Versatz, vorzugsweise einen Feuerbetonversatz, zur Herstellung eines grobkeramischen, feuerfesten, nicht basischen, geformten oder ungeformten Erzeugnisses, einen derartigen Feuerbetonversatz, ein derartiges Erzeugnis sowie ein Verfahren zu dessen Herstellung und eine Zustellung eines Industrieofens für die Aluminiumindustrie, und einen derartigen Industrieofen. Ferner betriff die Erfindung eine Zustellung eines Rinnentransportsystems oder eines mobilen Transportgefäßes für die Aluminiumindustrie, und ein derartiges Rinnentransportsystem und ein derartiges Transportgefäß. Die Aluminiumindustrie umfasst sowohl die Primäraluminium produzierende Industrie als auch die Aluminium verarbeitende und die Sekundäraluminium produzierende Industrie.

Der Begriff "feuerfest" soll im Rahmen der Erfindung nicht begrenzt sein auf die Definition gemäß ISO 836 bzw. DIN 51060, die einen Kegelfallpunkt von > 1500° C definieren. Feuerfeste Erzeugnisse im Sinne der Erfindung haben einen Druckerweichungspunkt T_{0,5} gemäß DIN EN ISO 1893: 2008-09 von T_{0,5} ≥ 600 °C, bevorzugt T_{0,5} ≥ 800 °C. Demnach sind feuerfeste bzw. refraktäre körnige Werkstoffe bzw. Körnungen im Sinne der Erfindung solche Werkstoffe bzw. Körnungen, die für ein feuerfestes Erzeugnis mit dem oben genannten Druckerweichungspunkt T_{0,5} geeignet sind.

Die erfindungsgemäßen feuerfesten Erzeugnisse werden zum Schutz von Aggregatkonstruktionen in Aggregaten eingesetzt, in denen Temperaturen zwischen 600 und 2000 °C, insbesondere zwischen 800 und 1500° C, vorherrschen.

Grobkeramische Erzeugnisse sind bekanntermaßen Erzeugnisse, die aus Körnungen mit Korngrößen bis 6 mm, in besonderen Fällen auch bis 25 mm hergestellt werden (siehe "Gerald Routschka/Hartmut Wuthnow, Praxishandbuch "Feuerfeste Werkstoffe", 6. Auflage, Vulkan-Verlag (im Folgenden lediglich mit "Praxishandbuch" bezeichnet), Kapitel 2).

Grobkeramik wird durch die Korngröße der Gefügebestandteile von der Feinkeramik unterschieden. Sind die Gefügebestandteile zumindest teilweise größer als 1 mm so liegt ein Grobkeramikprodukt vor, sind die Gefügebestandteile ausschließlich ≤ 1 mm, handelt es sich um Feinkeramik.

Dabei umfasst der Begriff "Körnung" bzw. "körniger Werkstoff" im Sinne der Erfindung einen schüttbaren Feststoff, der aus vielen kleinen, festen Körnern besteht. Weisen die Körner eine Korngröße ≤ 200 µm auf, handelt es sich bei der Körnung um ein Mehl bzw. Pulver. Sind die Körner durch mechanisches Zerkleinern, z.B. Brechen und/oder Mahlen, hergestellt, handelt sich um ein Brechgranulat bzw. eine gebrochene Körnung. Eine Körnung kann aber auch Granulatkörner oder Pelletkörner aufweisen, die durch Granulieren bzw. Pelletieren ohne mechanische Zerkleinerung hergestellt werden. Die Kornverteilung der Körnung wird in der Regel durch Siebung eingestellt.

Soweit nichts Gegenteiliges angegeben ist, werden die im Rahmen dieser Erfindung angegebenen Korngrößen zudem gemäß DIN 66165-2:2016-08 bestimmt.

Zudem handelt es sich, sofern nichts Gegenteiliges angegeben ist, bei den im Rahmen dieser Erfindung verwendeten Zuschlagstoffen/Körnungen um gebrochene Körnungen.

Im Rahmen der Erfindung weisen Kornfraktionen bzw. Kornklassen zudem jeweils Korngrößen zwischen den beiden angegebenen Prüfkorngrößen auf. Die Bezeichnung Kornfraktion bzw. Kornklasse meint somit, dass keine Körner auf dem oberen Sieb liegen bleiben und keine durch das untere durchfallen. Es liegt also kein Überkorn und kein Unterkorn vor.

Im Gegensatz dazu schließt die Bezeichnung "Korngruppe" ein, dass einige Körner auf dem oberen Sieb liegen bleiben (Überkorn) und einige durch das untere Sieb durchfallen (Unterkorn).

Zudem weisen auf dem Fachgebiet verwendete Kornfraktionen bzw. Korngruppen Körner unterschiedlicher Größe auf. Sie weisen also eine Kornverteilung bzw. Korngrößenverteilung auf. Es handelt sich nicht um Einkornfraktionen bzw. -gruppen.

Des Weiteren unterscheidet man bei den feuerfesten Erzeugnissen bekanntermaßen zwischen nichtbasischen (Praxishandbuch, 4.1) und basischen Erzeugnissen (Praxishandbuch, 4.2). Gemäß DIN EN ISO 10081 :2005-05 wird insbesondere basierend auf dem chemischen Reaktionsverhalten zwischen nicht basischen und basischen feuerfesten Erzeugnissen unterschieden. Die Erzeugnisgruppe der nicht basischen Erzeugnisse umfasst die Werkstoffe der SiO₂-Al₂O₃-Reihe und andere, nach ihrem chemischen Reaktionsverhalten nicht näher eingruppierbare Werkstoffe wie SiC- und Kohlenstoff-Produkte. Wesentliches Merkmal der meisten basischen Erzeugnisse ist es, dass die Summe der Oxide MgO und CaO überwiegt. Außerdem werden Chromit-, Picrochromit-, Spinell- und Forsteritsteine zu den basischen Erzeugnissen gerechnet, obwohl sie nahezu neutral sind.

Bei den grobkeramischen Erzeugnissen wird zudem zwischen geformten und ungeformten Erzeugnissen unterschieden.

Bei geformten grobkeramischen Erzeugnissen handelt es sich um ungebrannte, getemperte oder keramisch gebrannte, vorzugsweise in einer keramischen Fabrik hergestellte, Produkte, insbesondere Steine oder Platten. Sie haben eine definierte Geometrie und sind einbaufertig. Die Formgebung erfolgt z.B. durch Pressen, Stampfen, Rammen oder Schlickergießen. Die geformten Erzeugnisse, insbesondere die Steine, werden z.B. zur Ausbildung einer Zustellung, mit Mörtel oder mörtelfrei ("knirsch") vermauert. Der Produktionsprozess von grobkeramischen geformten Erzeugnissen gliedert sich üblicherweise in die folgenden Schritte (Praxishandbuch, Seite 14/Punkt 2.1):
- Aufbereitung
- Mischen
- Formgebung
- Trocknen
- (gegebenenfalls) thermische Behandlung bis 800 °C, Brennen oder Sintern
- Nachbehandlung (falls erforderlich)

Bei ungeformten Erzeugnissen (Praxishandbuch, Seite 142/Punkt 5) handelt es sich um Erzeugnisse, die, meist beim Anwender, aus einer ungeformten Frischmasse oder aus Batzen, z.B. durch Gießen, Vibrieren, Stochern, Stampfen oder Spritzen, in ihre endgültige Form gebracht werden. Ungeformte Erzeugnisse werden am Verwendungsort meist hinter Schalungen in größeren Feldern eingebracht und bilden nach der Erhärtung einen Teil der Zustellung. Beispielsweise handelt es sich bei den ungeformten Erzeugnissen um Spritzmassen, Stampfmassen, Gießmassen, Vibrationsmassen oder Vergussmassen.

Gemäß der DIN EN 1402-1 :2004-01 handelt es sich bei ungeformten feuerfesten Erzeugnissen um Gemische, die aus Zuschlagsstoffen und einem oder mehreren Bindemitteln bestehen, aufbereitet zum direkten Gebrauch, entweder im Anlieferungszustand oder nach Zugabe einer oder mehrerer geeigneter Flüssigkeiten. Sie können metallische, organische oder keramische Fasern enthalten. Diese Gemenge sind entweder dicht oder isolierend. Isolierende Gemenge sind solche, die eine Gesamtporosität von > 45 %, bestimmt nach EN 1094/4 an einem unter festgelegten Bedingungen gebrannten Probekörper besitzen.

Bei den Bindungsarten der ungeformten Erzeugnisse unterscheidet man zwischen:
a) hydraulischer Bindung mit Erstarren und hydraulischem Erhärten bei Raumtemperatur,
b) keramischer Bindung mit Erhärtung durch Versinterung beim Brand,
c) chemischer Bindung (anorganisch oder organisch-anorganisch) mit Erhärtung durch chemische, jedoch nicht hydraulische Reaktion bei Raumtemperatur oder bei einer Temperatur unterhalb der keramischen Bindung,
d) organischer Bindung mit Verfestigung oder Erhärtung bei Raumtemperatur oder bei höheren Temperaturen.

Dabei kommen in der Praxis häufig Mischbindungen vor.

Die ungeformten Erzeugnisse werden zudem nach den Produktarten und Verarbeitungsverfahren eingeteilt:
Feuerbetone stellen die wohl wichtigste Produktgruppe der ungeformten Erzeugnisse dar. Feuerbetone können dicht oder isolierend sein. Die dichten Feuerbetone werden gemäß DIN EN ISO 1927-1:2012-11 eingeteilt.

Herkömmliche Feuerbetone (Typ RC = regular castable) sind hydraulisch erhärtende und zemententhaltende Feuerbetone, die noch keinen Verflüssiger haben.

Verflüssigte Feuerbetone müssen mindestens einen Verflüssiger und mindestens 2 M.-% ultrafeine Partikel mit einer Korngröße < 1 µm enthalten. Bei den ultrafeinen Partikeln handelt es sich z. B. um pyrogene Kieselsäuren oder reaktive Tonerden.

Die verflüssigten Feuerbetone werden außerdem nach ihrem CaO-Gehalt der Mischung unterteilt in:

| | CaO-Gehalt [M.-%] | |
|---|---|---|
| | min. | max. |
| Medium-cement Feuerbeton (Typ MCC) | > 2,5 | - |
| Low-cement Feuerbeton (Typ LCC) | > 1,0 | ≤ 2,5 |
| Ultra-low-cement Feuerbeton (Typ ULCC) | > 0,2 | ≤ 1,0 |
| Zementfreier Feuerbeton (Typ NCC) | 0 | ≤ 0,2 |

Eine weitere Produktart sind die chemisch gebundenen Feuerbetone. Sie enthalten ein oder mehrere chemische Bindemittel, die nach Zugabe einer geeigneten Anmachflüssigkeit und nach intensivem Mischen in Folge einer Neutralisationsreaktion erhärten. Eine saubere Trennung zwischen einem chemisch gebundenen Feuerbetonen und einem verflüssigten Feuerbetonen von Typ NCC ist oftmals schwierig. Aber beim NCC muss die Festigkeitsbildung über Hydrate erfolgen, wie z.B. Tonerde-Hydrate und nicht über Sole oder Phosphate herbeigeführt werden (Praxishandbuch, Seite 145/vorletzter Absatz). Mischbindungen sind aber ebenfalls möglich.

Feuerbetone werden zudem nach Art der chemischen Zusammensetzung wie folgt eingeteilt (Praxishandbuch, Seite 149/Punkt 5.1.3):
Al₂O₃-SiO₂-Erzeugnisse sind Feuerbetone, deren Zuschlagsstoffe im Wesentlichen aus Zuschlagsstoffen aus Al₂O₃ (Tonerde bzw. Alumina), SiO₂ und Alumosilikaten bestehen.

Bei basischen Feuerbetonen bestehen die Zuschlagsstoffe im Wesentlichen aus Magnesia, Dolomit, Chrommagnesia, Chromerz und Spinell.

Bei speziellen Feuerbetonen bestehen die Zuschlagsstoffe im Wesentlichen aus anderen als den vorgenannten Rohstoffen, wie z. B. Kieselglas, Siliciumcarbid, Siliciumnitrid, Zirkonsilikat und Zirkonoxid.

Kohlenstoffhaltige Feuerbetone bestehen im Wesentlichen aus den oben genannten Zuschlagsstoffen, die jedoch mehr als ein Prozent Kohlenstoff oder Graphit enthalten.

Die erfindungsgemäßen geformten und ungeformten Erzeugnisse werden vorzugsweise in industriellen Brenn- oder Schmelz- oder in anderen befeuerten industriellen Aggregaten, z.B. in einem Industrieofen zur Bildung einer feuerfesten, feuerseitigen bzw. aggregatinnenseitigen Auskleidung (Arbeitsfutter bzw. Verschleißfutter) derselben verwendet. Vorzugsweise werden sie als Arbeitsfutter in Öfen der Aluminiumindustrie, bevorzugt in der Sekundäraluminiumindustrie, verwendet.

Die erfindungsgemäßen geformten und ungeformten Erzeugnisse können zudem auch als isolierende Hintermauerung, welche direkt im Anschluss an das Arbeitsfutter angeordnet ist, in einem der genannten Öfen verwendet werden.

Bei der Aluminiumherstellung in der Primäraluminiumindustrie wird das Primäraluminium durch Schmelzelektrolyse von Mineralien hergestellt. Die Herstellung von Primäraluminium erfolgt in der Regel durch Schmelzelektrolyse von Aluminiumerz, meist von Bauxit. Bei der Erzaufbereitung wird aus dem Bauxit Aluminiumoxid (Tonerde) angereichert. Danach erfolgt die eigentliche Metallgewinnung mit Hilfe der Schmelzflusselektrolyse.

Um den sehr hohen Schmelzpunkt von Aluminiumoxid von etwa 2050 °C herabzusetzen, gibt man Kryolith (Na₃AlF₆) und weitere Fluorverbindungen wie Aluminiumfluorid (AlF₃) und Calciumfluorid (CaF₂) im Überschuss, so dass der Schmelzpunkt des Gemisches auf etwa 950 °C herabgesetzt wird.

Das in der Schmelzflusselektrolyse erschmolzene Hüttenaluminium wird anschließend in verschiedenen Schmelzöfen legiert und für die verschiedenen Gießverfahren vorbereitet. Und die aus der Schmelze entstandenen Erzeugnisse werden entsprechend weiterverarbeitet. Das Legieren wird beispielsweise in Schmelzöfen bzw. Warmhalteöfen durchgeführt, in denen eine Aluminiumschmelze mit den Legierungsmitteln versetzt wird. Die Schmelzbadtemperaturen betragen ca. 850°C. Derartige Öfen sind häufig mit aluminosilikatischen feuerfesten Erzeugnissen feuerraumseitig ausgekleidet.

Die Produktion von Sekundäraluminium besteht in der Wiederverwertung von Aluminiumschrott oder Verarbeitungsabfällen, um Aluminium zu erhalten, das als "sekundäre" oder "zweite Fusion" bezeichnet wird. Zudem können auch Aluminiumlegierungen erhalten werden. Auch hierfür sind unterschiedliche Öfen notwendig, unter anderem Schmelzöfen, z.B. auch Recyclingöfen, Gieß- und Warmhalteöfen. Bei den Schmelzöfen handelt es sich vorzugsweise um (Kipp-) Drehtrommelöfen, Schachtschmelzöfen, (Rinnen-) Induktionsöfen oder Zwei- und Mehrkammeröfen. Auch werden Straßentransporttiegel und Gießereitransporttiegel oder andere mobile Transportgefäße für flüssiges Aluminium oder flüssige Aluminiumlegierungen sowie Rinnentransportsysteme (hierfür insbesondere Fertigbauteillösungen) benötigt. Die stationären Rinnentransportsysteme dienen ebenfalls zum Transport von flüssigem Aluminium oder flüssigen Aluminiumlegierungen. Bei diesen Öfen handelt es sich um Öfen der Sekundäraluminiumindustrie.

Allgemein handelt es sich bei der Sekundäraluminiumindustrie um die Aluminium weiterverarbeitende Industrie und die Aluminium wiederverwertende Industrie. Im Rahmen der Sekundäraluminiumindustrie werden z.B. Alumuminiumlegierungen hergestellt.

Wie bereits erläutert, werden die erfindungsgemäßen Erzeugnisse vorzugsweise in Öfen der Sekundäraluminiumindustrie eingesetzt. Vorzugsweise werden sie dabei als Arbeitsfutter im Badbereich, in der Rampe und den Brennerfeldern dieser Öfen eingesetzt. Das Arbeitsfutter steht im direkten Kontakt mit dem flüssigen Aluminium oder der flüssigen Aluminiumlegierung. Insbesondere werden sie wie folgt eingesetzt:
In Schmelzöfen, z. B. in Recyclingöfen: Als Arbeitsfutter im Badbereich, der Rampe und den Brennerfeldern
In Gießöfen: Als Arbeitsfutter im Badbereich, der Rampe und den Brennerfeldern
In Rinnensystemen: Als Arbeitsfutter
In (Transport-)Tiegeln: Als Arbeitsfutter
Problematisch bei der Herstellung und Weiterverarbeitung von Aluminium ist unter anderem, dass das Aluminium eine starke Affinität zu Sauerstoff hat, was zu unterschiedlichen Oxidationsmechanismen der feuerfesten Auskleidung führen kann. Auf der Badoberfläche bildet sich zudem eine Aluminiumoxidhaut (4Al (flüssig) + 3O₂ ---> Al₂O₃), die gewollt ist, da sie vor weiterer Oxidation schützt. Und im Kontaktbereich des flüssigen Aluminiums zur feuerfesten Auskleidung tritt, falls die Auskleidung freies SiO₂ enthält, folgende Reaktion auf:

   4Al (diff) + 3SiO₂ ---> 2Al₂O₃ + 3Si

Gattungsgemäße feuerfeste Erzeugnisse sollen deshalb eine hohe Dichte und eine hohe Infiltrationsbeständigkeit aufweisen. Zudem sollen sie ausreichend hohe Festigkeiten, eine hohe Korrosionsbeständigkeit und eine gute Temperaturwechselbeständigkeit aufweisen.

Um Gefügezerstörungen durch Kontaktkorrosion zu vermeiden, ist es zudem üblich, dass die feuerfesten Erzeugnisse als Korrosionsschutzmittel sogenannte "Anti-wetting" Additive bzw. Anti-Benetzungsmittel aufweisen. Es handelt sich z.B. um BaSO₄ oder um Fluoride, z.B. CaF₂ oder AlF₃. Die Anti-Benetzungsmittel werden zur Verhinderung der Infiltrationsneigung zugegeben. Ihr positiver Einfluss auf die Korrosionsbeständigkeit setzt sich teilweise oder kombinierend aus drei grundlegenden Mechanismen zusammen:
Es kann z.B. eine Volumenveränderung durch mineralische Umwandlungen und Phasenneubildungen durch Reaktion mit den umliegenden Medien und der Atmosphäre erfolgen. Dadurch werden Poren durch Versinterung verschlossen. Dies verringert somit die offene Porosität.

Außerdem kann eine viskose Schmelze durch teilweises Aufschmelzen der Rohstoffe gebildet werden. Dies wirkt verklebend bzw. verschließend und verringert so die Infiltrationsneigung. Es bildet sich somit eine Art Passivierungs- bzw. Schutzschicht aus.

Auch kann der Poreninnendruck erhöht werden, wodurch ebenfalls die Infiltrationsneigung verringert wird. Der Poreninnendruck wird zum Beispiel durch das Verdampfen von Phosphatverbindungen erhöht.

BaSO₄ und CaF₂ wirken zuverlässig im Bereich der Auskleidung unterhalb der Schmelzbadoberfläche, wo üblicherweise Temperaturen zwischen z. B. 760 bis 840°C bis maximal 1050°C vorherrschen. Auch oberhalb der Schmelzbadoberfläche, z. B. wenn der Schmelzbadspiegel durch Entnahme von Schmelze sinkt und die gebildete Schutzschicht der Ofenatmosphäre ausgesetzt ist, bleibt die Schutzschicht erhalten, wenn die Temperaturen der Ofenatmosphäre unter etwa 1050°C bleiben. Oberhalb dieser Temperatur zersetzen sich die Schutzschicht und auch die Additive im Auskleidungsmaterial, wobei zudem die Zersetzungsprodukte das feuerfeste Auskleidungsmaterial zumindest schwächen. Somit wird der Korrosionsschutz verringert und das Material durch Korrosion abgetragen.

Zusätzlich zu den Anti-Benetzungsmitteln verbessern stabile Calciumaluminatphasen wie z.B. CA, CA₂ und CA₆ die Korrosionsbeständigkeit.

Mehr und mehr werden Schmelzöfen zudem verwendet, die oberhalb des Schmelzbades mit energieeffizienteren Regenerativbrennern arbeiten, wobei Oberflächentemperaturen in den Öfen über 1450°C auftreten. Dadurch werden die Additive und insbesondere die Schutzschichten zersetzt, die bei Absenkung des Schmelzbadspiegels der heißeren Ofenbadatmosphäre ausgesetzt werden. Beim Auffüllen des Schmelzbades gelangen diese Zonen, die keine Schutzschicht mehr aufweisen, in Kontakt mit der Schmelze, woraus Korrosionsreaktionen zwischen Schmelze und feuerfestem Material der Auskleidung resultieren.

Infolgedessen ist aus der DE 10 2008 003 640 B4 ein Anti-Benetzungsmittel bekannt, das frei von Calciumfluorid ist, sich bis mindestens 1450°C nicht zersetzt und a) mindestens ein Fluorid aus der Gruppe der folgenden Fluoride: Aluminiumfluorid, Bariumfluorid, Strontiumfluorid, und b) ein synthetisch hergestelltes Bariumsulfat aufweist. Dieses Anti-Benetzungsmittel wirkt auch bei höheren Temperaturen.

Auch ist es z.B. aus der EP 2 550 243 B1 bekannt, Aluminiummetaphosphat als Bindemittel zuzusetzen. Das Aluminiummetaphosphat wirkt auch als Anti-Benetzungsmittel bei höheren Temperaturen. Die EP 2 550 243 B1 offenbart eine feuerfeste Zusammensetzung, umfassend eine Vielzahl von aggregierten Keramikpartikeln, ein Bindemittel, das an die Vielzahl von aggregierten Keramikpartikeln gesintert ist, wobei das Bindemittel kristallines Aluminiumorthophosphat umfasst, das in dem Bindemittel als Ergebnis der Reaktion von Aluminiummetaphosphat mit Aluminiumoxid verteilt ist, und einen nonfacilen Zusatzstoff aus Calciumaluminatzement, Natriumsilikat, Polyphosphat oder organischen Salzen.

Die Veröffentlichung Esmaeil Adabifiroozjaei, et al. "Effects of AlPO4 addition on the corrosion resistance of andalusite-based low-cement castables with molten Al-alloy", Journal of the European Ceramic Society, Bd. 33, Nr. 6, 1. Juni 2013, Seiten 1067-1075, befasst sich mit dem Effekt der Zugabe von AlPO₄ zu einem Andalusit basierten Versatz und stellt fest, dass die Korrosionsbeständigkeit deutlich verbessert wird.

Die Veröffentlichung Esmaeil Adabifiroozjaei, et al. "Effects of Different Calcium Compounds on the Corrosion Resistance of Andalusite-Based Low-Cement Castables in Contact with Molten Al-Alloy", Metallurgical and Materials Transactions B, Springer Verlag, New York, Bd. 42, Nr. 2, 11. Januar 2011, Seiten 400-411, befasst sich mit dem Effekt von unterschiedlichen Calciumkomponenten auf die Korrosionsbeständigkeit von Andalusit basierten Low-Cement Castables. Es wird u.a. ein Calciumphosphat, nämlich Ca₃(PO₄)₂ verwendet und festgestellt, dass dieses die Korrosionsbeständigkeit nicht oder nur unwesentlich verbessert. Es wird insbesondere festgestellt, dass dieses Calciumphosphat sich nicht zersetzt und deshalb keine neuen Phasen gebildet werden. Aufgrund dessen wurde die Korrosionsbeständigkeit nicht verbessert.

Und die US 6 447 596 B1 offenbart die Verwendung von wasserhaltigem Calciumdihydrogenphosphat (Ca(H₂PO₄)₂·H₂O) als Bindemittel, das mit der ebenfalls vorhandenen Calcium oder Magnesium bereitstellenden Komponente reagiert. Es werden zudem sehr viele verschiedene Feuerfestmaterialien aufgeführt.

Die CN 109 265 182 A offenbart die Verwendung eines modifizierten Apatits.

Die CN 106 915 968 A offenbart die Verwendung von einem Kaliumdihydrogenphosphat bzw. Aluminiumdihydrogenphosphat. Beide Phosphate sind gut wasserlöslich.

Gemäß der CN 109 400 188 A wird wasserlösliches Natriumhexametaphosphat verwendet.

Die US 4 126 474 A offenbart die Verwendung von Bariumsulfat in einem phosphatgebundenen Versatz.

Aufgabe der vorliegenden Erfindung ist die Bereitstellung eines Trockenstoffgemisches für einen Versatz, insbesondere einen Feuerbetonversatz, zur Herstellung eines grobkeramischen feuerfesten nicht-basischen, geformten oder ungeformten Erzeugnisses, wobei das Erzeugnis eine gute Korrosionsbeständigkeit und gute Infiltrationsbeständigkeit bei Benetzung mit Flüssigaluminium und flüssigen Aluminiumlegierungen aufweisen soll.

Weitere Aufgabe der Erfindung ist die Bereitstellung eines derartigen Feuerbetonversatzes.

Weitere Aufgabe der Erfindung ist die Bereitstellung einer geeigneten Verwendung des Versatzes und eines Verfahrens zur Herstellung eines Erzeugnisses aus dem Versatz.

Des Weiteren betrifft die Erfindung eine Zustellung eines Industrieofens für die Primär- oder Sekundäraluminiumindustrie, wobei die Zustellung, bevorzugt das Arbeits- bzw. Verschleißfutter der Zustellung, mindestens ein derartiges Erzeugnis aufweist, sowie einen derartigen Industrieofen.

Ferner betriff die Erfindung eine Zustellung eines Rinnentransportsystems oder eines mobilen Transportgefäßes für die Aluminiumindustrie, und ein derartiges Rinnentransportsystem und ein derartiges Transportgefäß.

Diese Aufgaben werden durch ein Trockenstoffgemisch mit den Merkmalen von Anspruch 1, einen Feuerbetonversatz mit den Merkmalen von Anspruch 12, eine Verwendung mit den Merkmalen von Anspruch 14, ein Verfahren mit den Merkmalen von Anspruch 16, eine Zustellung mit den Merkmalen von Anspruch 17 sowie einen Industrieofen mit den Merkmalen von Anspruch 21, ein Rinnentransportsystem mit den Merkmalen von Anspruch 23 und ein mobiles Transportgefäß mit den Merkmalen von Anspruch 24 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Temperarturabhängige Reaktionen im System Ca(HPO₄)/Al₂O₃
- Figur 2:: Temperarturabhängige Reaktionen im System AlPO₄/Al₂O₃
- Figur 3:: Aufgesägter Tiegel, beaufschlagt mit Flüssigaluminium bei 1000°C/150h
- Figur 4:: Aufgesägter Tiegel, beaufschlagt mit Flüssigaluminium bei 1200°C/150h

Im Rahmen der Erfindung wurde überraschenderweise herausgefunden, dass eine hervorragende Korrosionsbeständigkeit bei Benetzung mit Flüssigaluminium und Aluminiumlegierungen erreicht werden kann, wenn das erfindungsgemäße Trockenstoffgemisch zumindest ein erstes trockenes, mehlförmiges Phosphat mit einem Erweichungspunkt bestimmt durch Erhitzungsmikroskopie gemäß DIN ISO 540:2008 von 600 bis 1400 °C, bevorzugt 800 bis 1300 °C, und zumindest ein zweites trockenes, mehlförmiges Phosphat mit einem Erweichungspunkt bestimmt durch Erhitzungsmikroskopie gemäß DIN ISO 540:2008 von > 1600 °C in Kombination mit einer mehlförmigen Al₂O₃-Körnung aufweist.

Das erfindungsgemäße Trockenstoffgemisch weist somit folgende Bestandteile auf:
a) Grob- und feinkörnigen Zuschlag aus zumindest einem feuerfesten, nicht basischen, Zuschlagstoff mit einer Korngröße >200 µm, vorzugsweise in einer Gesamtmenge von 45 bis 80 M.-%, bevorzugt 50 bis 60 M.-%,
b) Mehlkörnigen Zuschlag aus zumindest einem feuerfesten, nicht basischen Zuschlagstoff mit einer Korngröße ≤ 200 µm, vorzugsweise in einer Gesamtmenge von 15 bis 50 M.-%, bevorzugt 25 bis 40 M.-%, wobei der mehlkörnige Zuschlag eine Al₂O₃-Körnung aufweist,
c) gegebenenfalls zumindest ein Bindemittel in trockener Form,
d) zumindest ein Antikorrosionsmittel, insbesondere ein Anti-Benetzungsmittel, in Form eines ersten trockenen, mehlförmigen Phosphats mit einem Erweichungspunkt gemäß DIN ISO 540:2008 von 600 bis 1400, bevorzugt 800 bis 1300 °C,
   und
e) zumindest ein Antikorrosionsmittel, insbesondere ein Anti-Benetzungsmittel, in Form eines zweiten trockenen, mehlförmigen Phosphats mit einem Erweichungspunkt gemäß DIN ISO 540:2008 von > 1600 °C.

Und der erfindungsgemäße Feuerbetonversatz weist das Trockenstoffgemisch und additiv zu dem Trockenstoffgemisch zumindest ein flüssiges Bindemittel in beigepackter Form auf.

Phosphate sind die Salze und Ester der Orthophosphorsäure (H₃PO₄). Phosphor (P) liegt bei allen diesen Verbindungen in der Oxidationsstufe (V) vor. Man unterscheidet zudem unter anderem zwischen primären Phosphaten (Dihydrogenphosphate), sekundären Phosphaten (Hydrogenphosphate) und tertiären Phosphaten.

Erfindungsgemäß handelt es sich bei dem ersten Phosphat um ein primäres Phosphat oder ein sekundäres Phosphat.

Erfindungsgemäß handelt es sich um Calciumdihydrogenphosphat (Ca(H₂PO₄)₂), Magnesiumdihydrogenphosphat (Mg(H₂PO₄)₂), Calciumhydrogenphosphat (CaHPO₄) oder Magnesiumhydrogenphosphat (MgHPO₄).

Oder es handelt sich erfindungsgemäß um Calciumhydrogenphosphat als Dihydrat (CaHPO₄ · 2 H₂O) oder Magnesiumhydrogenphosphat als Trihydrat (MgHPO₄ · 3 H₂O).

Und bei dem zweiten Phosphat handelt es sich erfindungsgemäß um ein tertiäres Phosphat, nämlich um Aluminiumphosphat (AlPO₄)

Erfindungsgemäß sind die beiden Phosphate nicht oder nur mäßig in Wasser löslich, um den pH-Wert der aus dem erfindungsgemäßen Versatz hergestellten Versatzfrischmasse nicht zu beeinflussen. Erfindungsgemäß weisen die Phosphate eine Löslichkeit in Wasser bei 20°C gemäß DIN EN 15216:2008-1 von < 50 g/l, vorzugsweise von < 30 g/l, besonders bevorzugt < 20 g/l, auf.

Ganz besonders bevorzugt weisen die Phosphate eine Löslichkeit in Wasser bei 20°C gemäß DIN EN 15216:2008-1 von < 1 g/l, vorzugsweise von < 0,1 g/l, auf. Derartige Phosphate sind für die Erfindung besonders gut geeignet.

Generell handelt es sich bei dem ersten Phosphat vorzugsweise um ein nicht in Wasser lösliches Calciumphosphat oder ein nicht in Wasser lösliches Magnesiumphosphat bzw. ein Calciumphosphat oder ein Magnesiumphosphat mit der angegebenen geringen Löslichkeit, insbesondere mit einer Löslichkeit < 1 g/L, bevorzugt < 0,1 g/L, und dem für das erste Phosphat angegebenen Erweichungspunkt.

Das Calciumphosphat oder Magnesiumphosphat kann wasserfrei oder wasserhaltig sein, bevorzugt ist es wasserfrei.

Besonders bevorzugt handelt es sich um ein sekundäres, wasserfreies oder wasserhaltiges, bevorzugt wasserfreies, Calciumphosphat (=Calciumhydrogenphosphat) oder ein sekundäres, wasserfreies oder wasserhaltiges, bevorzugt wasserfreies, Magnesiumphosphat (=Magnesiumhydrogenphosphat).

Zudem weist der Versatz vorzugsweise einen auf die gesamte Trockenmasse des Versatzes bezogenen Gesamtgehalt an P₂O₅, bestimmt mittels Röntgenfluoreszenzanalyse gemäß DIN EN ISO 12677:2013-2, von 2 bis 10 M.-%, bevorzugt von 4 bis 6 M.-%, auf.

Vorzugsweise weist das Trockenstoffgemisch einen Gesamtanteil von 2 bis 10 M.-%, bevorzugt 4 bis 7 M.-%, an erstem Phosphat auf.

Vorzugsweise beträgt zudem der aus dem zumindest einen ersten Phosphat resultierende Gesamtanteil an P₂O₅ im Trockenstoffgemisch, bestimmt mittels Röntgenfluoreszenzanalyse gemäß DIN EN ISO 12677:2013-2, 1,0 bis 6,0 M.-%, bevorzugt 2,0 bis 4,0 M.-%.

Vorzugsweise weist das Trockenstoffgemisch zudem einen Gesamtanteil von 2 bis 10 M.-%, bevorzugt 2 bis 6 M.-% an zweitem Phosphat auf.

Vorzugsweise beträgt zudem der aus dem zumindest einen zweiten Phosphat resultierende Gesamtanteil an P₂O₅ im Trockenstoffgemisch, bestimmt mittels Röntgenfluoreszenzanalyse gemäß DIN EN ISO 12677:2013-2, 1,0 bis 6,0 M.-%, bevorzugt von 1,2 bis 3,0 M.-%.

Des Weiteren weisen die beiden Phosphate vorzugsweise eine Schüttdichte nach DIN ISO 697:1984-01 von 200 bis 1400 g/l, bevorzugt von 400 bis 900 g/l, auf. Die Schüttdichte gewährleistet ein gutes Verarbeitungsverhalten.

Zusätzlich sind die Phosphate vorzugsweise kennzeichnungsfrei (ungiftig/nicht gesundheitsschädlich).

Die Al₂O₃-Komponente bzw. Al₂O₃-Körnung besteht aus zumindest einem Rohstoff, der mindestens 40 M.-%, bevorzugt mindestens 90 M.-%, besonders bevorzugt mindestens 95 M.-%, Aluminiumoxid (Al₂O₃) enthält.

Die Al₂O₃-Komponente bzw. Al₂O₃-Körnung besteht somit besonders bevorzugt aus Tonerde (Alumina). Sie kann aber auch aus einem Alumosilikat oder einem anderen aluminareichen bzw. tonerdereichen Rohstoff bestehen.

Vorzugsweise besteht die mehlförmige Al₂O₃-Körnung aus Tonerde, bevorzugt aus Schmelzkorund, insbesondere Edelkorund, und/oder calcinierter Tonerde, z.B. Reaktivtonerde, und/oder Sinterkorund, besonders bevorzugt Tabulartonerde, oder Sinterbauxit. Sie kann aber z.B. auch aus Spinell und/oder Mullit und/oder Schamotte bestehen. Die Al₂O₃-Körnung kann somit aus einem einzigen oder mehreren aluminareichen bzw. tonerdereichen Rohstoffen bestehen.

Vorzugsweise weist der Versatz dabei einen Gesamtanteil von 15 bis 50 M.-%, bevorzugt 25 bis 40 M.-%, an mehlförmiger Al₂O₃-Körnung, bezogen auf die gesamte Trockenmasse des Versatzes, auf.

Dabei weist die mehlförmige Al₂O₃-Körnung vorzugsweise eine Kornfraktion mit einer Korngröße ≤ 100 µm, bevorzugt eine Kornfraktion mit einer Korngröße ≤ 30 µm, auf.

Vorzugsweise beträgt der Anteil der Kornfraktion der Al₂O₃-Körnung mit einer Korngröße ≤ 100 µm im Trockenstoffgemisch 10 bis 45 M.-%, bevorzugt 20 bis 35 M.-%.

Vorzugsweise beträgt der Anteil der Kornfraktion der Al₂O₃-Körnung mit einer Korngröße ≤ 30 µm im Trockenstoffgemisch 5 bis 35 M.-%, bevorzugt 10 bis 20 M.-%.

Die Kombination der beiden Phosphate mit der mehlförmigen Al₂O₃-Körnung gewährleistet erfindungsgemäß eine Korrosionsschutzwirkung über einen breiten Temperaturbereich von 1000 bis 1400 °C.

Vorzugsweise beträgt das Massenverhältnis der beiden Phosphate : Al₂O₃-Körnung 1:2 bis 1:6, bevorzugt 1:3 bis 1:5.

Das erste Phosphat bildet unter Vorliegen von Al₂O₃ als Reaktionspartner neue Phasen unterhalb 1050°C, die die Korrosionsbeständigkeit durch oben die beschriebenen Mechanismen oberhalb von 1050 °C verbessern. Das weniger reaktive zweite Phosphat ist in diesem Temperaturbereich unreaktiver (kein frühzeitiges Erweichen des Gefüges) und durchläuft lediglich Modifikationswechsel (AlPO₄: Berlinit, Cristobalit, Tridymit) und verdichtet das Gefüge bei Temperaturen > 1100 °C.

Insbesondere führen Phasenumwandlungen des ersten Phosphats mit der Al₂O₃-Körnung, vorzugsweise der Tonerde, und/oder dem zweiten Phosphat, nämlich dem AlPO₄, zur Verbesserung. Bei noch höheren Temperaturen (oberhalb des Erweichungspunktes der Calciumaluminatphosphatphasen) bleibt das zweite Phosphat, nämlich das AlPO₄, stabil und erhöht zusätzlich, bedingt durch die Umwandlungen und der zunehmenden Versinterung/Verdichtung die Festigkeiten. Die beiden erfindungsgemäßen Phosphate ergänzen sich somit temperaturabhängig, allein wären die Eigenschaften bei beiden nicht gegeben. Das erste Phosphat ist früh reaktiv, bildet neue Phasen und erweicht, das zweite Phosphat, nämlich das AlPO₄, dient als Reaktionspartner, unterliegt Modifikationswechseln und verfestigt bei hohen Temperaturen das Gefüge.

Wie bereits erläutert, weist der erfindungsgemäße Versatz zudem feuerfesten Zuschlag auf. Der feuerfeste, nicht basische Zuschlag bildet in an sich bekannter Weise die Rohstoffbasis des Trockenstoffgemisches und/oder des Feuerbetonversatzes.

Der feuerfeste Zuschlag besteht in an sich bekannter Weise aus zumindest einem feuerfesten, nicht-basischen, Zuschlagstoff. Zudem weist der Zuschlag eine für die Herstellung eines grobkeramischen feuerfesten Produkts übliche Kornverteilung auf. Das heißt der Zuschlag weist somit eine Korngrößenverteilung auf, so dass die groben Zuschlagkörner im hergestellten Erzeugnis in an sich bekannter Weise eine Stützgefügekörner bilden, welche in die Bindematrix eingebettet sind.

Das heißt, der Zuschlag weist vorzugsweise sowohl einen Feinkornanteil bzw. eine Feinkornfraktion als auch einen Grobkornanteil bzw. eine Grobkornfraktion auf. Dabei weisen sowohl der Feinkornanteil als auch der Grobkornanteil vorzugsweise eine stetige Korngrößenverteilung auf. Der Feinkornanteil weist zudem einen Mehlkornanteil bzw. eine Mehlkornfraktion auf.

Mit Feinkornanteil werden dabei im Rahmen der Erfindung alle Körnungen ≤ 1 mm und > 200 µm bezeichnet. Der Grobkornanteil weist entsprechend Korngrö-ßen > 1 mm auf. Mit Mehlkornanteil werden im Rahmen der Erfindung alle Körnungen ≤ 200 µm bezeichnet.

Vorzugsweise beträgt der Grobkornanteil 40 bis 60 M.-%, bezogen auf die Gesamtmenge an Zuschlag.

Vorzugsweise weist der Zuschlag zudem eine maximale Korngröße ≤ 15 mm, bevorzugt ≤ 7 mm, auf.

Vorzugsweise bestehen die übrigen Zuschlagstoffe des Zuschlags ebenfalls aus tonerdereichen bzw. aluminareichen Rohstoffen, bevorzugt mit einem Gehalt von mindestens 40 M.-% Al₂O₃, besonders bevorzugt mindestens 80 M.-% Al₂O₃, ganz besonders bevorzugt mindestens 90 M.-% Al₂O₃.

Es handelt sich bei dem erfindungsgemäßen Feuerbetonversatz somit vorzugsweise um ein Al₂O₃-SiO₂-Erzeugnis.

Und die erfindungsgemäßen Erzeugnisse sind vorzugsweise Erzeugnisse der SiO₂-Al₂O₃-Reihe.

Vorzugsweise bestehen die Zuschlagstoffe des Zuschlags aus Tonerde (Alumina), bevorzugt aus Schmelzkorund, bevorzugt Edelkorund, und/oder calcinierter Tonerde, z.B. Reaktivtonerde, und/oder Sinterkorund, bevorzugt Tabulartonerde, und/oder Sinterbauxit. Sie können aber z.B. auch aus anderen aluminareichen bzw. tonerdereichen Rohstoffen bestehen, bevorzugt aus Spinell und/oder Mullit und/oder aus Schamotte.

Vorzugsweise besteht der Zuschlag dabei zu mindestens 80 M.-%, bevorzugt zu mindestens 90 M.-%, bevorzugt zu 100 M.-% aus Zuschlagstoffen aus Tonerde (Alumina). Dadurch wird das Reaktionspotential mit Flüssigaluminium und Aluminiumlegierungen verringert.

Vorzugsweise weist das Trockenstoffgemisch aus diesem Grund auch einen Al₂O₃-Gehalt von 60 bis 92 M.-%, bevorzugt 80 bis 90 M.-% auf.

Die mehlförmige Al₂O₃-Körnung bildet folglich einen Teil des mehlförmigen Zuschlags. Und der Gesamtanteil an mehlförmiger Al₂O₃-Körnung setzt sich zusammen aus dem Mehlkornanteil aller aus einem tonerdereichen bzw. aluminareichen Rohstoff mit dem oben genannten Mindestgehalt an Al₂O₃ bestehenden Zuschlagstoffe.

Wie bereits erläutert, weist das Trockenstoffgemisch zudem gegebenenfalls ein trockenes Bindemittel, vorzugsweise in Mengen von 0 bis 20 M.-%, bevorzugt 1 bis 7 M.-%, auf.

Trockene Bindemittel liegen bekanntermaßen in körniger Form bzw. als Körnung vor. Bei dem trockenen Bindemittel handelt es sich vorzugsweise um ein hydraulisches Bindemittel, bevorzugt Calciumaluminatzement (CAZ), und/oder um Wasserglas und/oder Aluminiumhydroxid-Binder und/oder ein Geopolymerbindemittel und/oder einen Phosphatbinder aus einem wasserlöslichen Phosphat.

Im Gegensatz zu Phosphatbindern bilden die erfindungsgemäßen Phosphate aufgrund ihrer höchstens mäßigen Löslichkeit zwischen Raumtemperatur und 800 °C keine Bindung aus. Sie verschieben deshalb den pH Wert der Mischung beim Anmischen nicht. Es finden keine Neutralisationsreaktionen mit Ausfällung neuer Phasen statt.

Calciumaluminatzement ist dabei insbesondere bei ungeformten Erzeugnissen besonders bevorzugt, da er für eine gute Verarbeitbarkeit sorgt und ein kontrolliertes Abbindeverhalten gewährleistet. Insbesondere gewährleistet Calciumaluminatzement eine gute Festigkeit nach 24 h nach dem Abbinden bei Raumtemperatur.

Der erfindungsgemäße Feuerbetonversatz weist zudem, wie oben beschrieben, additiv zu dem Trockenstoffgemisch zumindest ein flüssiges Bindemittel, vorzugsweise in einer Menge von 4 bis 12 M.-%, bevorzugt 6 bis 10 M.-%, bezogen auf die Trockenmasse des Trockenstoffgemisches auf. Additiv bedeutet also, dass der Anteil an flüssigem, beigepackten Bindemittel auf die Trockenmasse des Trockenstoffgemisches bezogen wird (siehe Ausführungsbeispiele).

Bei dem flüssigen Bindemittel handelt es sich vorzugsweise um Kieselsol und/oder Alumina-Sol und/oder ein organisches Bindemittel und/oder einen Phosphatbinder. Besonders bevorzugt wird Kieselsol verwendet.

Die flüssigen Bindemittel sind in einem von den trockenen Bestandteilen des Versatzes getrennten Behältnis beigepackt.

Der Versatz weist zudem vorzugsweise einen Gesamtanteil (Wirkstoffgehalt) von 1 bis 30 M.-%, bevorzugt 1 bis 15 M.-%, an Bindemittel, bezogen auf die gesamte Trockenmasse des Versatzes, auf. Bei dem flüssigen Bindemittel wird selbstverständlich lediglich der Wirkstoffgehalt miteinbezogen, falls es sich um eine Suspension oder dergleichen handelt.

Die gesamte Trockenmasse des Versatzes bzw. der daraus hergestellten Versatzfrischmasse ergibt sich also aus der Summe der trockenen Versatzbestandteile (=Trockenmasse des Trockenstoffgemisches) und gegebenenfalls dem Wirkstoffgehalt der flüssigen Versatzbestandteile.

Der erfindungsgemäße Versatz, insbesondere das Trockenstoffgemisch, kann zudem zumindest einen weiteren Zusatzstoff (zusätzlich zu den beiden erfindungsgemäßen Phosphaten) enthalten. Zusatzstoffe verbessern z.B. die Verarbeitbarkeit bzw. Verformbarkeit oder die Korrosionsbeständigkeit oder modifizieren das Gefüge. Die Zusatzstoffe können in mehlförmiger, trockener oder additiv zum Trockenstoffgemisch in flüssiger Form (beigepackt) im Versatz enthalten sein. Der maximale Anteil an zusätzlichen Zusatzstoff(en) (Wirkstoffgehalt) im erfindungsgemäßen Versatz, bezogen auf die Trockenmasse des Versatzes, beträgt vorzugsweise < 10 M.-%, bevorzugt < 6 M.-%.

Vorzugsweise weist der erfindungsgemäße Versatz, insbesondere das Trockenstoffgemisch, als Zusatzstoff zumindest einen Verflüssiger auf, insbesondere wenn es sich bei dem Versatz um einen verflüssigten Feuerbetonversatz handelt.

Des Weiteren weist der erfindungsgemäße Versatz, insbesondere das Trockenstoffgemisch, als Zusatzstoff vorzugsweise zumindest ein weiteres, phosphatfreies, Antikorrosionsmittel auf. Vorzugsweise weist der Versatz Bariumsulfat und/oder ein fluoridhaltiges Antikorrosionsmittel, bevorzugt Calciumfluorid und/oder Strontiumfluorid und/oder Aluminiumfluorid auf.

Zusätzlich zu den vorgenannten Anti-Benetzungsmitteln kann zumindest ein Antikorrosionsmittel aus einer stabilen Calciumaluminatphase wie z.B. aus CA, CA₂ oder CAe enthalten sein.

Zudem kann der Versatz, insbesondere das Trockenstoffgemisch, als Zusatzstoff zumindest einen Aktivator für das Bindemittel aufweisen. Beispielsweise handelt es sich hierbei um mehlförmige Magnesia und/oder ein Sulfat und/oder pulverförmiges Wasserglas. Die Aktivatoren dienen insbesondere zur pH-Wert Verschiebung.

Das Trockenstoffgemisch kann zudem als Zusatzstoff, insbesondere ausbrennbare, Fasern enthalten. Vorzugsweise handelt es sich um Kunststofffasern, vorzugsweise Polypropylenfasern. Der Gesamtanteil an Fasern im Trockenstoffgemisch beträgt dabei vorzugsweise < 1 M.-%, bevorzugt < 0,5 M.-%. Nach dem Ausbrennen werden Kanäle gebildet, durch welche in an sich bekannter Weise Wasserdampf entweichen kann. Die Fasern stellen also eine Aufheizhilfe dar.

Wie bereits erläutert werden aus dem erfindungsgemäßen grobkeramischen Versatz in an sich bekannter Weise geformte oder ungeformte Erzeugnisse hergestellt.

Für die Herstellung von ungeformten Erzeugnissen, insbesondere von Massen, bevorzugt Spritzmassen oder Vibrationsmassen oder Gießmassen oder Stochermassen, wird eine Versatzfrischmasse aus den trockenen und flüssigen Bestandteilen des Feuerbetonversatzes hergestellt. Da der Versatz ein flüssiges Bindemittel enthält, ist die Zugabe von Wasser nicht notwendig, aber möglich.

Die Versatzfrischmasse wird in an sich bekannter Weise verarbeitet, z.B. durch Spritzen oder besonders bevorzugt durch Gießen.

Bei den erfindungsgemäßen geformten Erzeugnissen handelt es sich um Fertigbauteile. Bei der Herstellung der Fertigbauteile, wird die wie oben beschreiben hergestellte Versatzfrischmasse in eine Form gegeben und gegebenenfalls verdichtet, so dass Formkörper gebildet werden. Falls der Versatz ein flüssiges Bindemittel und/oder einen flüssigen Zusatzstoff enthält, ist die Zugabe von Wasser nicht notwendig, aber möglich. Es wird also gegebenenfalls auch nur Wasser zugegeben, insbesondere falls ein trockenes Bindemittel im Trockenstoffgemisch enthalten ist. Im Unterschied zu der Herstellung der ungeformten Erzeugnisse aus dem erfindungsgemäßen Feuerbetonversatz müssen die flüssigen Versatzbestandteile zudem nicht beigepackt vorliegen.

Gegebenenfalls wird, abhängig vom verwendeten Bindemittel, nach der Formgebung eine Trocknung durchgeführt, z.B. zwischen 60 und 500 °C, insbesondere zwischen 90 und 450 °C. Die Trocknung erfolgt vorzugsweise bis auf eine Restfeuchte zwischen 0,1 und 4 M.-%, insbesondere zwischen 0,5 und 3 Gew.-%, bestimmt gemäß DIN 51078:2002-12.

Die erfindungsgemäßen Fertigbauteile, insbesondere die Steine, werden ungebrannt oder getempert verwendet.

Sowohl die geformten Fertigbauteile als auch die ungeformten Erzeugnisse weisen hervorragende mechanische Eigenschaften auf. Sofern nicht anders erläutert, basieren die im Folgenden angegebenen Werte auf eine normgemäße Prüfung der Erzeugnisse gemäß DIN EN ISO 1927-6:2013-04 nach einer normgemäßen Herstellung der Probekörper mit einer Wärmebehandlung bei 1100°C gemäß DIN EN ISO 1927-5:2013-04:
Die erfindungsgemäßen Erzeugnisse weisen eine sehr gute Kaltdruckfestigkeit gemäß DIN EN ISO 1927-6:2013-04 vorzugsweise von 50 bis 90 MPa, insbesondere 60 bis 75 MPa, auf.

Die Kaltbiegefestigkeit nach DIN EN ISO 1927-6:2013-043 der erfindungsgemäßen Erzeugnisse, liegt vorzugsweise bei 12 bis 20 MPa, insbesondere bei 15 bis 18 MPa.

Die erfindungsgemäßen Erzeugnisse weisen zudem vorzugsweise eine offene Porosität von 13 bis 22 Vol.-%, bevorzugt 17 bis 21 Vol.-%, bestimmt gemäß DIN EN ISO 1927-6:2013-04 auf.

Und/oder sie weisen vorzugsweise eine Rohdichte von 2,50 bis 3,00 g/cm³, insbesondere von 2,8 bis 2,95 g/cm³, bestimmt gemäß DIN EN ISO 1927-6:2013-04 auf.

Die erfindungsgemäßen Erzeugnisse weisen zudem vorzugsweise einen E-Modul von 50 bis 80 GPa, insbesondere von 60 bis 70 GPa, bestimmt gemäß DIN EN ISO 1927-6:2013-04 auf.

Alle vorgenannten Eigenschaften der erfindungsgemäßen Erzeugnisse und des erfindungsgemäßen Versatzes sind jeweils einzeln und in jeglicher Kombination erfindungsgemäß. Zudem sind die jeweils angegebenen Ober- und Untergrenzen der einzelnen Bereichsangaben erfindungsgemäß alle miteinander kombinierbar.

Um die Wirkungsweise der beiden erfindungsgemäßen Phosphate in Kombination mit der Al₂O₃-Körnung zu belegen, wurden im Rahmen der Erfindung einige Vergleichsversuche durchgeführt. Für die Vergleichsversuche wurden folgende Rohstoffe verwendet:

**Tabelle 1: Verwendete Rohstoffe**

| | |
|---|---|
| Tabular Tonerde (alle Korngruppen) | Tabular Alumina T60 Fa. Almatis |
| Edelkorund 0 - 0,2 mm | White Fused Alumina 0 - 0.2 Fa. Bosai |
| Calcinierte Tonerde | CT 9 G Fa. Almatis, d₉₉ Wert = 63 µm |
| Zweites Phosphat (AlPO₄) | M 13-02 Fa. Budenheim |
| Erstes Phosphat (Ca(HPO₄)) | C 22-03 Fa. Budenheim, d₅₀ Wert = 12 µm |
| Verflüssiger | Castament FS 20 Fa. BASF |
| PP Faser | Polypropylen geschnitten, 20 µm, 6mm Fa. Contrack |
| Silika Sol | LIQUIDBINDER NO.1 Fa. CWK |

Unter anderem wurden Vergleichsversuche mit dem ersten Phosphat und mit dem zweiten Phosphat, jeweils in Kombination mit der calcinierten Tonerde, durchgeführt. Das erste Phosphat und die calcinierte Tonerde wurden im Verhältnis 1:3 miteinander gemischt. Das zweite Phosphat und die calcinierte Tonerde wurden ebenfalls im Verhältnis 1:3 miteinander gemischt. Die Mischungen wurden jeweils in einem Tiegel mit Temperaturen von 800°C und 1200°C beaufschlagt. Zudem wurden eine Differenzthermoanalyse und eine Röntgenbeugungsanalyse der Ausgangmischungen und der gebrannten Mischungen durchgeführt.

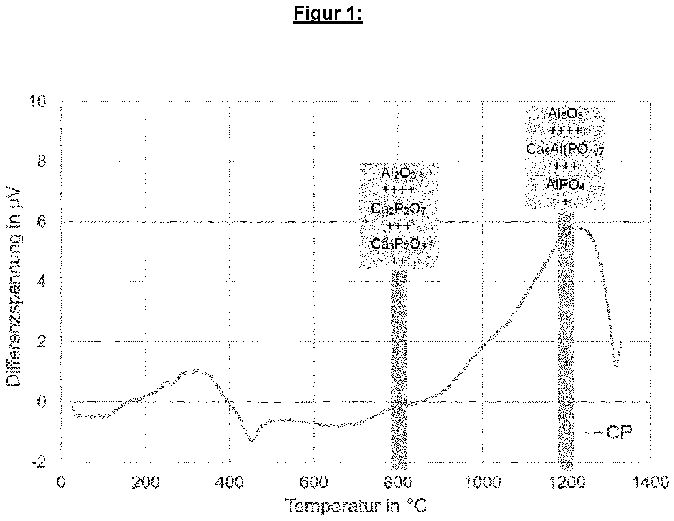

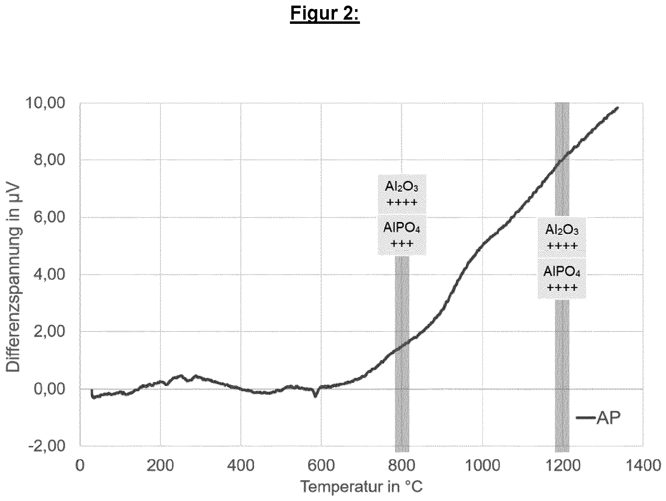

Das Ergebnis der Messungen zeigen Figuren 1 und 2.

Es wurde unter anderem festgestellt, dass das erste Phosphat zunächst bei ca. 400 °C beginnt, zu entwässern (Fig. 1). Bei 800°C liegt das Ca-Phosphat als Dicalciumphosphat Ca₂(P₂O₇) vor, beginnt aber bereits mit der calcinierten Tonerde zu Calciumaluminiumphosphat Ca₉Al(PO₄)₇ zu reagieren. Bei 1200°C ist die Reaktion zu Calciumaluminiumphosphat Ca₉Al(PO₄)₇ vollständig.

Das zweite Phosphat (Fig. 2) unterliegt lediglich Modifikationsänderungen analog zu SiO₂. Bei 800°C ist sowohl die Quarzstruktur (Berlinit) als auch die Tridymit- und Cristobalitstruktur enthalten. Bei 1200°C liegt das Aluminiumphosphat (AlPO₄) fast nur noch in der Cristobalitstruktur vor. Die Gesamtmenge Aluminiumphosphat (AlPO₄) scheint in etwa gleich zu bleiben. Die calcinierte Tonerde vollzieht keine signifikanten Änderungen (beteiligt sich ggf. an der Phosphatumwandlung).

Hauptsächlich kommt es somit zur Bildung von Calciumaluminatphosphat aus Dicalciumphosphat unter Vorliegen von mehlförmigem Al₂O₃ bei Temperaturen von 800 bis 1000 °C. Bei 1000 °C sind keine Dicalciumphosphatphasen mehr nachweisbar, die Calciumaluminatphosphatphasen sind bis mindestens 1200 °C stabil und dienen zur Verbesserung der Korrosionsbeständigkeit. Das AlPO₄ dient einerseits als Reaktionspartner, durchläuft dennoch hauptsächlich Modifikationswechsel. Bei 800 °C liegt es in der Berlinit, Tridymit und Cristobalit Modifikation vor, bei 1000 °C und 1200 °C noch in der Tridymit und Cristobalit Modifikation. Diese Reaktionen führen zu einem Anstieg der Festigkeiten und einer Verringerung der offenen Porosität nach Vorband bei 1200 °C, dies bestätigte auch ein Versuch mit AlPO₄ in einem typischen System ohne weitere Phosphate (siehe unten). Bei niedrigeren Temperaturen zeigt es keinen signifikanten Einfluss, ein Grund für die Kombination mit dem ersten Phosphat.

Des Weiteren wurde anhand des nachfolgenden Versatzes die verdichtende Wirkung von reinem Aluminiumphosphat (AlPO₄) untersucht:

**Tabelle 2: Versatzzusammensetzung für die Bestimmung der physikalischen Eigenschaften (Korngruppen)**

| | | Anteil [M.-%] |
|---|---|---|
| Tabular Tonerde | 2 - 5 mm | 25,00 |
| | 1 - 3 mm | 20,00 |
| | 0 - 1 mm | 20,00 |
| Edelkorund | 0 - 0.02 mm | 10,00 |
| Tonerde | | 22,00 |
| Zweites Phosphat (AlPO₄) | | 3,00 |
| Verflüssiger | | 0,10 |
| PP Faser | | 0,05 |
| | | Σ 100 |
| Silika Sol | | 7,5 (bezogen auf Trockenstoffgemisch) |

Die Bestimmung der Kaltbiegefestigkeit (KBF) und der offenen Porosität (OP) am oben genannten Versatz erfolgte nach Vorbrand bei 1200 °C entsprechend den jeweiligen oben genannten Normen. Auch die Herstellung der Probekörper erfolgte normgemäß gemäß DIN EN ISO 1927-5:2013-04.

**Tabelle 3: Ergebnisse der Bestimmung der physikalischen Eigenschaften**

| **KBF in MPa** | **Offene Porosität in Vol.-%** |
|---|---|
| 18,00 | 17,00 |

Zudem wurden weitere Vergleichsversuche bezüglich der Korrosionsbeständigkeit gegen Aluminiumschmelze durchgeführt.

Dazu wurden Tiegel aus einem Versatz mit folgender Versatzzusammensetzung hergestellt:

**Tabelle 4: Versatzzusammensetzung (Korngruppen) für die Tiegeltests**

| | | Anteil [M.- %] |
|---|---|---|
| Tabular Tonerde | 2 - 5 mm | 25,00 |
| | 1 - 3 mm | 20,00 |
| | 0 - 1 mm | 20,00 |
| Edelkorund | 0 - 0,2 mm | 10,00 |
| Calcinierte Tonerde | | 16,85 |
| AlPO₄ | | 3,00 |
| Ca(HPO₄) | | 5,00 |
| Verflüssiger | | 0,10 |
| PP Faser | | 0,05 |
| | | Σ100 |
| Silika Sol | | 7,50 |

Die Tiegel wurden in Anlehnung gemäß der oben genannten Norm hergestellt und bei der jeweiligen Testtemperatur mit einer Haltezeit von 5 h vorgebrannt.

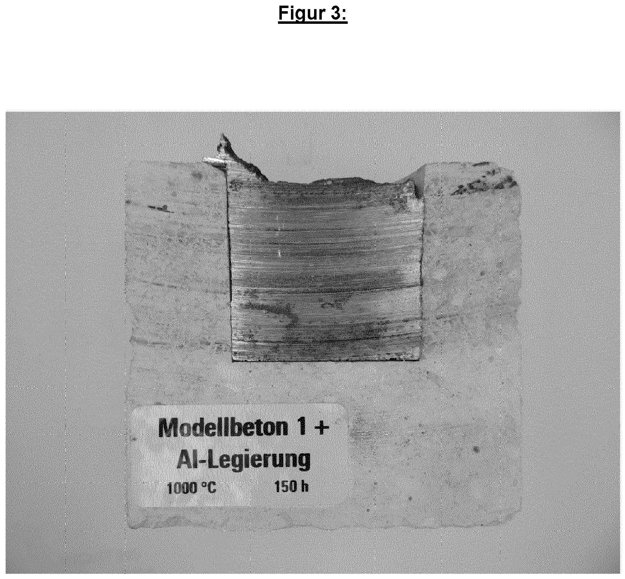

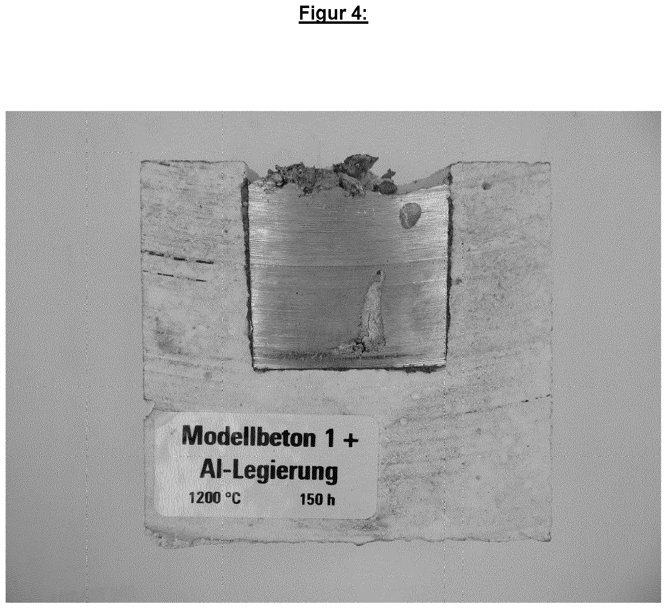

Es wurde festgestellt, dass sich bei den mit 1000°C beaufschlagten Tiegeln eine dichte Passivierungs- bzw. Schutzschicht (Fig. 3) bildete. Diese Passivierungsschicht bestand auch noch bei den mit 1200°C beaufschlagten Tiegeln (Fig. 4). Es fand keine weitere Infiltration statt.

Ergänzend wurden noch weitere Versuche mit drei verschiedenen Versätzen V1 bis V3 durchgeführt, um die Veränderung des Erweichungsverhaltens zu dokumentieren. Die Herstellung der Probekörper erfolgte wiederum gemäß DIN EN ISO 1927-5:2013-04. Der Erweichungsbereich wurde gemäß DIN EN ISO 1893: 2008-09 bestimmt. Nachfolgend ist eine Tabelle der Versatzzusammensetzungen und eine Tabelle mit den ermittelten Erweichungsbereichen aufgeführt:

**Tabelle 5: Versatzzusammensetzung für die Versuche V1 bis V3**

| Rohstoff | Anteil | V1 | V2 | V3 |
|---|---|---|---|---|
| Tonerde | [M.-%] | 69,23 | 78,95 | 58,44 |
| Erstes Phosphat | [M.-%] | 30,77 | 0,00 | 25,97 |
| Zweites Phosphat | [M.-%] | 0,00 | 21,05 | 15,58 |
| Silika Sol (flüssig) | [M.-%] | 51,08 | 58,25 | 43,12 |

**Tabelle 6: Erweichungsbereiche für die Versuche V1 bis V3**

| Probe | Erweichungsbereich |
|---|---|
| V1 | 1080 °C ... 1247 °C |
| V2 | > 1546 °C |
| V3 | 1166 °C ... 1342 °C |

Die Ergebnisse zeigen, dass der Versatz V1, der ausschließlich reines Calciumhydrogenphosphat aufweist früher erweicht und die erfindungsgemäße Phosphatkombination einen höheren Erweichungspunkt gewährleistet.

## Patentansprüche

1. Trockenstoffgemisch für einen Versatz, bevorzugt einen Feuerbetonversatz, zur Herstellung eines grobkeramischen, feuerfesten, ungebrannten, geformten oder ungeformten, nicht-basischen Erzeugnisses, insbesondere für ein Arbeitsfutter oder eine Hintermauerung eines großvolumigen Industrieofens der Aluminiumindustrie oder für ein Arbeitsfutter eines Rinnentransportsystems oder eines mobilen Transportgefäßes der Aluminiumindustrie zum Transport von flüssigem Aluminium oder einer flüssigen Aluminiumlegierung, aufweisend:
a) Grob- und feinkörnigen Zuschlag aus zumindest einem feuerfesten, nicht basischen Zuschlagstoff mit einer Korngröße > 200 µm, vorzugsweise in einer Gesamtmenge von 45 bis 80 M.-%, bevorzugt 50 bis 60 M.-%,
b) Mehlkörnigen Zuschlag aus zumindest einem feuerfesten, nicht basischen Zuschlagstoff mit einer Korngröße ≤ 200 µm, vorzugsweise in einer Gesamtmenge von 15 bis 50 M.-%, bevorzugt 25 bis 40 M.-%, wobei der mehlkörnige Zuschlag eine Al₂O₃-Körnung aufweist,
c) zumindest ein Antikorrosionsmittel zur Verbesserung der Korrosionsbeständigkeit gegenüber Aluminiumschmelzen,
d) gegebenenfalls zumindest ein trockenes Bindemittel,
**dadurch gekennzeichnet, dass**
das Trockenstoffgemisch als Antikorrosionsmittel zumindest ein erstes trockenes, mehlförmiges Phosphat mit einem Erweichungspunkt, bestimmt durch Erhitzungsmikroskopie nach DIN ISO 540:2008 von 600 bis 1400 °C, bevorzugt 800 bis 1300 °C, und
zumindest ein zweites trockenes, mehlförmiges Phosphat mit einem Erweichungspunkt, bestimmt durch Erhitzungsmikroskopie nach DIN ISO 540:2008 von > 1600 °C aufweist,
wobei die beiden Phosphate jeweils eine Löslichkeit in Wasser bei 20°C gemäß DIN EN 15216:2008-1 von < 50 g/l, vorzugsweise von < 30 g/l, bevorzugt < 20 g/l, aufweisen, und
wobei es sich bei dem zumindest einen ersten Phosphat um Calciumdihydrogenphosphat (Ca(H₂PO₄)₂), Magnesiumdihydrogenphosphat (Mg(H₂PO₄)₂), Calciumhydrogenphosphat (CaHPO₄) oder Magnesiumhydrogenphosphat (MgHPO₄) oder Calciumhydrogenphosphat-Dihydrat (CaHPO₄· 2 H₂O) oder Magnesiumhydrogenphosphat-Trihydrat (MgH-PO₄ · 3 H₂O), bevorzugt um Calciumhydrogenphosphat (CaHPO₄), handelt, und
wobei es sich bei dem zumindest einen zweiten Phosphat um Aluminiumphosphat (AlPO₄) handelt.

2. Trockenstoffgemisch nach Anspruch 1,
**dadurch gekennzeichnet, dass**
a) das zumindest eine erste Phosphat eine Löslichkeit in Wasser bei 20°C gemäß DIN EN 15216:2008-1 von < 1 g/l, vorzugsweise von < 0,1 g/l, aufweist,
und/oder
b) das zumindest eine erste Phosphat nicht in Wasser löslich ist.

3. Trockenstoffgemisch nach einem der vorhergehenden Ansprüche, **dadurch gekennzeichnet, dass**
a) es sich bei dem zumindest einen ersten Phosphat um ein sekundäres Calciumphosphat oder Magnesiumphosphat handelt,
und/oder
b) es sich bei dem zumindest einen ersten Phosphat um ein primäres Calciumphosphat oder Magnesiumphosphat handelt.

4. Trockenstoffgemisch nach einem der vorhergehenden Ansprüche, **dadurch gekennzeichnet, dass**
die mehlförmige Al₂O₃-Körnung eine Kornfraktion mit einer Korngröße ≤ 100 µm, bevorzugt eine Kornfraktion mit einer Korngröße ≤ 30 µm, aufweist,
wobei vorzugsweise der Anteil der Kornfraktion der Al₂O₃-Körnung mit einer Korngröße ≤ 100 µm im Trockenstoffgemisch 10 bis 45 M.-%, bevorzugt 20 bis 35 M.-%, beträgt und/oder der Anteil der Kornfraktion der Al₂O₃-Körnung mit einer Korngröße ≤ 30 µm im Trockenstoffgemisch 5 bis 35 M.-%, bevorzugt 10 bis 20 M.-%, beträgt.

5. Trockenstoffgemisch nach einem der vorhergehenden Ansprüche, **dadurch gekennzeichnet, dass**
a) das Trockenstoffgemisch einen Gesamtanteil von 2 bis 10 M.-%, bevorzugt 4 bis 7 M.-%, an erstem Phosphat, aufweist,
und/oder
b) der aus dem zumindest einen ersten Phosphat resultierende Gesamtanteil an P₂O₅ im Trockenstoffgemisch, bestimmt mittels Röntgenfluoreszenzanalyse gemäß DIN EN ISO 12677:2013-2, 1,0 bis 6,0 M.-%, bevorzugt 2,0 bis 4,0 M.-%, beträgt.

6. Trockenstoffgemisch nach einem der vorhergehenden Ansprüche, **dadurch gekennzeichnet, dass**
a) das Trockenstoffgemisch einen Gesamtanteil von 2 bis 10 M.-%, bevorzugt 2 bis 6 M.-%, an zweitem Phosphat aufweist,
und/oder
b) der aus dem zweiten Phosphat resultierende Gesamtanteil an P₂O₅ im Trockenstoffgemisch, bestimmt mittels Röntgenfluoreszenzanalyse gemäß DIN EN ISO 12677, 1,0 bis 6,0 M.-%, bevorzugt von 1,2 bis 3,0 M.-% beträgt.

7. Trockenstoffgemisch nach einem der vorhergehenden Ansprüche, **dadurch gekennzeichnet, dass**
die beiden Phosphate eine Schüttdichte nach DIN ISO 697:1984-01 von 200 bis 1400 g/l, bevorzugt von 400 bis 900 g/l, aufweisen.

8. Trockenstoffgemisch nach einem der vorhergehenden Ansprüche, **dadurch gekennzeichnet, dass**
a) die Al₂O₃-Körnung aus zumindest einem tonerdereichen Rohstoff mit einem Al₂O₃-Gehalt von ≥ 40 M.-%, bevorzugt ≥ 90 M.-%, besonders bevorzugt ≥ 95 M.-%, besteht,
und/oder
b) die Al₂O₃-Körnung aus Tonerde, vorzugsweise aus Schmelzkorund, bevorzugt Edelkorund, und/oder calcinierter Tonerde, z.B. Reaktivtonerde, und/oder Sinterkorund, bevorzugt Tabulartonerde, und/oder Sinterbauxit, und/oder aus Spinell und/oder Mullit und/oder Schamotte besteht.

9. Trockenstoffgemisch nach einem der vorhergehenden Ansprüche, **dadurch gekennzeichnet, dass**
a) das Trockenstoffgemisch einen Gesamtanteil von 15 bis 50 M.-%, bevorzugt 25 bis 40 M.-%, an mehlförmiger Al₂O₃-Körnung aufweist, und/oder
b) der grob- und feinkörnige Zuschlag einen Feinkornanteil mit einer Korngröße ≤ 1 mm und > 200 µm und einen Grobkornanteil mit einer Korngröße > 1 mm aufweist.

10. Trockenstoffgemisch einem der vorhergehenden Ansprüche,
**dadurch gekennzeichnet, dass**
a) der Zuschlag zu mindestens 40 M.-%, bevorzugt zu mindestens 90 M.-%, bevorzugt zu 100 M.-% aus Zuschlagstoffen aus Alumina und/oder Alumosilikaten besteht,
und/oder
b) der Zuschlag zu mindestens 80 M.-%, bevorzugt zu mindestens 90 M.-%, bevorzugt zu 100 M.-% aus Zuschlagstoffen aus Alumina besteht.

11. Trockenstoffgemisch einem der vorhergehenden Ansprüche,
**dadurch gekennzeichnet, dass**
a) es sich bei dem trockenen Bindemittel um ein hydraulisches Bindemittel, bevorzugt Calciumaluminatzement, und/oder um Wasserglas und/oder Aluminiumhydroxid-Binder und/oder ein Geopolymerbindemittel und/oder einen Phosphatbinder handelt,
und/oder
b) das Trockenstoffgemisch ein weiteres, phosphatfreies, Antikorrosionsmittel, vorzugsweise Bariumsulfat und/oder ein fluoridhaltiges Antikorrosionsmittel, bevorzugt Calciumfluorid und/oder Strontiumfluorid und/oder Aluminiumfluorid und/oder ein Antikorrosionsmittel aus einer stabilen Calciumaluminatphase wie z.B. aus CA, CA₂ oder CAe aufweist,
und/oder
c) das Trockenstoffgemisch zumindest einen Verflüssiger aufweist.

12. Feuerbetonversatz zur Herstellung eines grobkeramischen, feuerfesten, ungebrannten, geformten oder ungeformten, nicht-basischen Erzeugnisses, insbesondere für ein Arbeitsfutter oder eine Hintermauerung eines großvolumigen Industrieofens der Aluminiumindustrie oder für ein Arbeitsfutter eines Rinnentransportsystems oder eines mobilen Transportgefäßes der Aluminiumindustrie zum Transport von flüssigem Aluminium oder einer flüssigen Aluminiumlegierung, aufweisend:
a) ein Trockenstoffgemisch gemäß einem der vorhergehenden Ansprüche, und
b) additiv zu dem Trockenstoffgemisch zumindest ein flüssiges Bindemittel in beigepackter Form.

13. Feuerbetonversatz nach Anspruch 12,
**dadurch gekennzeichnet, dass**
a) der Versatz einen auf die gesamte Trockenmasse des Versatzes bezogenen Gesamtgehalt an P₂O₅, bestimmt mittels Röntgenfluoreszenzanalyse gemäß DIN EN ISO 12677:2013-2 von 2 bis 10 M.-%, bevorzugt von 4 bis 6 M.-%, aufweist,
und/oder
b) der Versatz ein verflüssigter Feuerbetonversatz ist,
und/oder
c) es sich bei dem flüssigen Bindemittel um Kieselsol und/oder Alumina-Sol und/oder ein organisches Bindemittel und/oder einen Phosphatbinder -handelt.

14. Verwendung eines Versatzes aufweisend ein Trockenstoffgemisch nach einem der Ansprüche 1 bis 11, vorzugsweise eines Feuerbetonversatzes gemäß Anspruch 12 oder 13, zur Herstellung eines grobkeramischen, feuerfesten, ungebrannten, geformten oder ungeformten, nicht-basischen Erzeugnisses, insbesondere eines Erzeugnisses für ein Arbeitsfutter oder eine Hintermauerung eines großvolumigen Industrieofens der Aluminiumindustrie oder für ein Arbeitsfutter eines Rinnentransportsystems oder eines mobilen Transportgefäßes der Aluminiumindustrie zum Transport von flüssigem Aluminium oder einer flüssigen Aluminiumlegierung.

15. Verwendung nach Anspruch 14,
**dadurch gekennzeichnet, dass**
der Versatz, insbesondere der Feuerbetonversatz, zur Herstellung eines Fertigbauteils verwendet wird.

16. Verfahren zur Herstellung eines grobkeramischen, feuerfesten, ungebrannten, geformten oder ungeformten, nicht-basischen Erzeugnisses, insbesondere für ein Arbeitsfutter oder eine Hintermauerung eines großvolumigen Industrieofens der Aluminiumindustrie,
**dadurch gekennzeichnet, dass**
das Erzeugnis hergestellt wird aus einem Versatz aufweisend ein Trockenstoffgemisch nach einem der Ansprüche 1 bis 11, vorzugsweise aus einem Feuerbetonversatz gemäß Anspruch 12 oder 13.

17. Zustellung eines Industrieofens vorzugsweise eines Schmelzofens oder Gießofens oder Warmhalteofens, oder eines stationären Rinnentransportsystems oder eines mobilen Transportgefäßes für die Primär- oder Sekundäraluminium-Industrie,
**dadurch gekennzeichnet, dass**
die Zustellung zumindest ein Erzeugnis, bevorzugt ein Fertigbauteil, aufweist, welches hergestellt ist aus einem Versatz aufweisend ein Trockenstoffgemisch nach einem der Ansprüche 1 bis 11, vorzugsweise aus einem Feuerbetonversatz gemäß Anspruch 12 oder 13.

18. Zustellung nach Anspruch 17,
**dadurch gekennzeichnet, dass**
die Zustellung ein Arbeitsfutter aufweist, welches das zumindest eine feuerfeste Erzeugnis aufweist,
wobei das Arbeitsfutter vorzugsweise in einem Ein- oder Mehrschichtmauerwerk eingebaut ist.

19. Zustellung nach Anspruch 17 oder 18,
**dadurch gekennzeichnet, dass**
die Zustellung eine isolierende Hintermauerung aufweist, welche das zumindest eine feuerfeste Erzeugnis aufweist.

20. Zustellung nach einem der Ansprüche 17 bis 19,
**dadurch gekennzeichnet, dass**
die Zustellung im Badbereich, im Bereich der Rampe oder im Brennerfeld des Industrieofens angeordnet ist.

21. Industrieofen für die Primär- oder Sekundäraluminium-Industrie, vorzugsweise Schmelzofen oder Gießofen oder Warmhalteofen,
**dadurch gekennzeichnet, dass**
der Industrieofen eine Zustellung gemäß einem der Ansprüche 17 bis 20 aufweist.

22. Industrieofen nach Anspruch 21,
**dadurch gekennzeichnet, dass**
es sich bei dem Schmelzofen um einen Drehtrommelofen, z.B. einen Kipp-Drehtrommelofen, einen Schachtschmelzofen, einen Induktionsofen, z.B. einen Rinnen-Induktionsofen, oder einen Zwei- oder Mehrkammerofen handelt.

23. Stationäres Rinnentransportsystem für die Primär- oder Sekundäraluminium-Industrie zum Transport von flüssigem Aluminium oder einer flüssigen Aluminiumlegierung,
**dadurch gekennzeichnet, dass**
das Rinnentransportsystem eine Zustellung gemäß einem der Ansprüche 17 bis 19 aufweist.

24. Mobiles Transportgefäß für die Primär- oder Sekundäraluminium-Industrie zum Transport von flüssigem Aluminium oder einer flüssigen Aluminiumlegierung,
**dadurch gekennzeichnet, dass**
das Transportgefäß eine Zustellung gemäß einem der Ansprüche 17 bis 19 aufweist.

## Claims

1. Dry substance mixture for a batch, preferably a refractory concrete batch, for the production of a coarse ceramic, refractory, unfired, shaped or unshaped, non-basic product, in particular for a working casing or a backing of a large-volume industrial furnace of the aluminum industry or for a working casing of a launder transport system or a mobile transport vessel of the aluminum industry for the transport of liquid aluminum or a liquid aluminum alloy, comprising:
a) coarse- and fine-grained aggregate of at least one refractory, non-basic aggregate material with a grain size > 200 µm, preferably in a total amount of 45 to 80 ma.%, preferably 50 to 60 ma.%,
b) meal-grained aggregate of at least one refractory, non-basic aggregate with a grain size ≤ 200 µm, preferably in a total amount of 15 to 50 ma.%, preferably 25 to 40 ma.%, wherein the meal-grained aggregate comprise an Al₂O₃ granular material,
c) at least one anti-corrosion agent to improve corrosion resistance to molten aluminum,
d) optionally at least one dry binder,
**characterized in that**
the dry substance mixture comprises as anticorrosive agent at least one first dry, mealy phosphate having a softening point, determined by heating microscopy according to DIN ISO 540:2008, of 600 to 1400°C, preferably 800 to 1300°C, and
at least a second dry, mealy phosphate having a softening point, determined by heating microscopy according to DIN ISO 540:2008, of > 1600°C,
the two phosphates each having a solubility in water at 20°C according to DIN EN 15216:2008-1 of < 50 g/l, preferably < 30 g/l, more preferably < 20 g/l, and
wherein the at least one first phosphate is calcium dihydrogen phosphate (Ca(H₂PO₄)₂), magnesium dihydrogen phosphate (Mg(H₂PO₄)₂), calcium hydrogen phosphate (CaHPO₄) or magnesium hydrogen phosphate (MgHPO₄) or calcium hydrogen phosphate dihydrate (CaHPO₄ · 2 H₂O) or magnesium hydrogen phosphate trihydrate (MgHPO₄ . 3 H₂O), preferably calcium hydrogen phosphate (CaHPO₄), and
wherein the at least one second phosphate is aluminum phosphate (AlPO₄).

2. Dry substance mixture according to claim 1,
**characterized in that**
a) the at least one first phosphate has a solubility in water at 20°C according to DIN EN 15216:2008-1 of < 1 g/l, preferably of < 0.1 g/l, and/or
b) the at least one first phosphate is not soluble in water.

3. Dry substance mixture according to any one of the preceding claims, **characterized in that**
a) the at least one first phosphate is a secondary calcium phosphate or magnesium phosphate,
and/or
b) the at least one first phosphate is a primary calcium phosphate or magnesium phosphate.

4. Dry substance mixture according to one of the preceding claims, **characterized in that**
the mealy Al₂O₃ granular material has a grain fraction with a grain size ≤ 100 µm, preferably a grain fraction with a grain size ≤ 30 µm,
wherein preferably the amount of the grain fraction of the Al₂O₃ granular material with a grain size ≤ 100 µm in the dry substance mixture is 10 to 45 ma.%, preferably 20 to 35 ma.%, and/or the amount of the grain fraction of the Al₂O₃ granular material with a grain size ≤ 30 µm in the dry substance mixture is 5 to 35 ma.%, preferably 10 to 20 ma.%.

5. Dry material mixture according to one of the preceding claims, **characterized in that**
a) the dry substance mixture has a total amount of first phosphate of 2 to 10 ma.%, preferably 4 to 7 ma.%,
and/or
b) the total amount of P₂O₅ in the dry substance mixture resulting from the at least one first phosphate, determined by means of X-ray fluorescence analysis in accordance with DIN EN ISO 12677:2013-2, is 1.0 to 6.0 ma.%, preferably 2.0 to 4.0 ma.%.

6. Dry substance mixture according to one of the preceding claims, **characterized in that**
a) the dry substance mixture has a total amount of second phosphate of 2 to 10 ma.%, preferably 2 to 6 ma.%,
and/or
b) the total amount of P₂O₅ in the dry substance mixture resulting from the at least one second phosphate, determined by means of X-ray fluorescence analysis in accordance with DIN EN ISO 12677:2013-2, is 1.0 to 6.0 ma.%, preferably 1.2 to 3.0 ma.%.

7. Dry substance mixture according to one of the preceding claims, **characterized in that**
the two phosphates have a bulk density according to DIN ISO 697:1984-01 of from 200 to 1400 g/l, preferably from 400 to 900 g/l.

8. Dry substance mixture according to one of the preceding claims, **characterized in that**
a) the Al₂O₃ granular material consists of at least one raw material rich in alumina with an Al₂O₃ content of ≥ 40 ma.%, preferably ≥ 90 ma.%, particularly preferably ≥ 95 ma.%,
and/or
b) the Al₂O₃ granular material consists of alumina, preferably fused alumina, preferably white fused alumina, and/or calcined alumina, e.g. reactive alumina, and/or sintered alumina, preferably tabular alumina, and/or sintered bauxite, and/or of spinel and/or mullite and/or fireclay.

9. Dry material mixture according to one of the preceding claims, **characterized in that**
a) the dry substance mixture has a total amount of 15 to 50 ma.%,
preferably 25 to 40 ma.%, of mealy Al₂O₃ granular material,
and/or
b) the coarse- and fine-grained aggregate has a fine-grain fraction with a grain size ≤ 1 mm and > 200 µm and a coarse-grain fraction with a grain size > 1 mm.

10. Dry aggregate mixture according to one of the preceding claims, **characterized in that**
a) the aggregate consists of at least 40 ma.%, preferably of at least 90 ma.%, preferably of 100 ma.% of aggregate materials of alumina and/or aluminosilicates,
and/or
b) the aggregate consists of at least 80 ma.%, preferably of at least 90 ma.%, preferably of 100 ma.% of aggregate materials of alumina.

11. Dry substance mixture according to one of the preceding claims, **characterized in that**
a) the dry binder is a hydraulic binder, preferably calcium aluminate cement, and/or water glass and/or aluminum hydroxide binder and/or a geopolymer binder and/or a phosphate binder,
and/or
b) the dry substance mixture comprises a further, phosphate-free, anti-corrosion agent, preferably barium sulfate and/or a fluoride-containing anti-corrosion agent, preferably calcium fluoride and/or strontium fluoride and/or aluminum fluoride and/or an anti-corrosion agent from a stable calcium aluminate phase, such as from CA, CA₂ or CA₆,
and/or
c) the dry mix comprises at least one liquefier.

12. Refractory concrete batch for the production of a coarse ceramic, refractory, unfired, shaped or unshaped, non-basic product, in particular for a working casing or a backing of a large-volume industrial furnace of the aluminum industry or for a working casing of a launder transport system or a mobile transport vessel of the aluminum industry for the transport of liquid aluminum or a liquid aluminum alloy, comprising:
a) a dry substance mixture according to one of the preceding claims, and
b) in addition to the dry substance mixture at least one liquid binder in enclosed form.

13. Refractory concrete batch according to claim 12,
**characterized in that**
a) the batch has a total content of P₂O₅, determined by X-ray fluorescence analysis in accordance with DIN EN ISO 12677:2013-2, of 2 to 10 ma.%, preferably of 4 to 6 ma.%, based on the total dry mass of the batch,
and/or
b) the batch is a liquefied refractory concrete batch,
and/or
c) the liquid binder is silica sol and/or alumina sol and/or an organic binder and/or a phosphate binder.

14. Use of a batch comprising a dry substance mixture according to one of claims 1 to 11, preferably of a refractory concrete batch according to claim 12 or 13, for the production of a coarse ceramic, refractory, unfired, shaped or unshaped, non-basic product, in particular of a product for a working casing or a backing of a large-volume industrial furnace of the aluminum industry or for a working casing of a launder transport system or a mobile transport vessel of the aluminum industry for transporting liquid aluminum or a liquid aluminum alloy.

15. Use according to claim 14,
**characterized in that**
the batch, in particular the refractory concrete batch, is used for the production of a prefabricated component.

16. Method for the production of a coarse ceramic, refractory, unfired, shaped or unshaped, non-basic product, in particular for a working casing or a backing of a large-volume industrial furnace of the aluminum industry, **characterized in that**
the product is produced from a batch comprising a dry substance mixture according to one of claims 1 to 11, preferably from a refractory concrete batch according to claim 12 or 13.

17. Lining of an industrial furnace preferably a smelting furnace or casting furnace or holding furnace, or of a stationary launder transport system or a mobile transport vessel for the primary or secondary aluminum industry, **characterized in that**
the lining comprises at least one product, preferably a prefabricated component, which is produced from a batch comprising a dry substance mixture according to one of claims 1 to 11, preferably from a refractory concrete batch according to claim 12 or 13.

18. Lining according to claim 17,
**characterized in that**
the lining comprises a working casing comprising the at least one refractory product,
wherein preferably the working casing is installed in a single-layer or multilayer masonry.

19. Lining according to claim 17 or 18,
**characterized in that**
the casing comprises an insulating backing comprising the at least one refractory product.

20. Lining according to one of claims 17 to 19,
**characterized in that**
the lining is arranged in the bath region, in the region of the ramp or in the burner field of the industrial furnace.

21. Industrial furnace for the primary or secondary aluminum industry, preferably smelting furnace or casting furnace or holding furnace, **characterized in that**
the industrial furnace comprises a lining according to one of claims 17 to 20.

22. Industrial furnace according to claim 21,
**characterized in that**
the smelting furnace is a drum melting furnace, e.g. a tilting drum melting furnace, a shaft smelting furnace, an induction furnace, e.g. a channel induction furnace, or a two- or multi-chamber furnace.

23. Stationary launder transport system for the primary or secondary aluminum industry for transporting liquid aluminum or a liquid aluminum alloy,
**characterized in that**
the launder transport system comprises a lining according to one of claims 17 to 19.

24. Mobile transport vessel for the primary or secondary aluminum industry for transporting liquid aluminum or a liquid aluminum alloy,
**characterized in that**
the transport vessel comprises a lining according to any one of claims 17 to 19.

## Revendications

1. Composé de matières sèches pour un mélange, de préférence un mélange de béton réfractaire, pour la fabrication d'un produit non basique en céramique grossière, réfractaire, non cuit, moulé ou non moulé, en particulier pour un revêtement de travail ou une maçonnerie arrière d'un four industriel de grand volume de l'industrie de l'aluminium ou pour un revêtement de travail d'un système de transport par gouttière ou d'un récipient de transport mobile de l'industrie de l'aluminium pour le transport d'aluminium liquide ou d'un alliage d'aluminium liquide, comprenant:
a) Agrégat à grains grossiers et à grains fins constitué d'au moins un agrégat réfractaire non basique avec une taille de grain> 200 µm, de préférence en une quantité totale de 45 à 80 % en masse, de préférence de 50 à 60 % en masse,
b) Agrégat farineux constitué d'au moins un agrégat réfractaire non basique ayant une taille de grain ≤ 200 µm, de préférence en une quantité totale de 15 à 50 % en masse, de préférence de 25 à 40 % en masse, ledit agrégat farineux ayant un matériau granulaire Al₂O₃,
c) au moins un agent anticorrosion pour améliorer la résistance à la corrosion de l'aluminium en fusion,
d) éventuellement au moins un liant sec,
**caractérisé en ce que**
le composé de matières sèches contient, en tant qu'agent anticorrosion, au moins un premier phosphate sec en forme de farine ayant un point de ramollissement, déterminé par microscopie thermique selon DIN ISO 540:2008, de 600 à 1400 °C, de préférence de 800 à 1300 °C, et
au moins un deuxième phosphate sec, en forme de farine, ayant un point de ramollissement, déterminé par microscopie thermique selon DIN ISO 540:2008, de > 1600 °C,
les deux phosphates comprenant chacun une solubilité dans l'eau à 20°C selon DIN EN 15216:2008-1 de < 50 g/l, de préférence de < 30 g/l, en priorité de < 20 g/l, et
ledit au moins un premier phosphate étant du dihydrogénophosphate de calcium (Ca(H₂PO₄)₂), du dihydrogénophosphate de magnésium (Mg(H₂PO₄)₂), l'hydrogénophosphate de calcium (CaHPO₄) ou l'hydrogénophosphate de magnésium (MgHPO₄) ou l'hydrogénophosphate de calcium dihydraté (CaHPO₄· 2 H₂O) ou l'hydrogénophosphate de magnésium trihydraté (MgHPO₄ . 3 H₂O), de préférence l'hydrogénophosphate de calcium (CaHPO₄), et
ledit au moins un deuxième phosphate étant du phosphate d'aluminium (AlPO₄).

2. Composé de matières sèches selon la revendication 1,
**caractérisé en ce que**
a) le au moins un premier phosphate comprend une solubilité dans l'eau à 20°C selon DIN EN 15216:2008-1 de < 1 g/l, de préférence de < 0,1 g/l,
et/ou
b) le au moins un premier phosphate n'est pas soluble dans l'eau.

3. Composé de matières sèches selon l'une quelconque des revendications précédentes,
**caractérisé en ce que**
a) ledit au moins un premier phosphate est un phosphate de calcium ou un phosphate de magnésium secondaire,
et/ou
b) ledit au moins un premier phosphate est un phosphate de calcium ou un phosphate de magnésium primaire.

4. Composé de matières sèches selon l'une quelconque des revendications précédentes,
**caractérisé en ce que**
le matériau granulaire Al₂O₃ farineux comprend une fraction granulaire avec une taille de grain ≤ 100 µm, de préférence une fraction granulaire avec une taille de grain ≤ 30 µm,
où, de préférence, la proportion de la fraction granulaire du matériau granulaire Al₂O₃ ayant une taille de grain ≤ 100 µm dans le mélange de matière sèche est de 10 à 45 % en masse, de préférence de 20 à 35 % en masse, et/ou la proportion de la fraction granulaire du matériau granulaire Al₂O₃ ayant une taille de grain ≤ 30 µm dans le mélange de matière sèche est de 5 à 35 % en masse, de préférence de 10 à 20 % en masse.

5. Composé de matières sèches selon l'une quelconque des revendications précédentes,
**caractérisé en ce que**
a) le composé de matières sèches comprend une proportion totale de 2 à 10 % en masse, de préférence de 4 à 7 % en masse, de premier phosphate,
et/ou
b) la proportion totale de P₂O₅ résultant de l'au moins un premier phosphate dans le composé de matières sèches, déterminée par analyse de fluorescence X selon DIN EN ISO 12677:2013-2, est de 1,0 à 6,0 % en masse, de préférence de 2,0 à 4,0 % en masse.

6. Composé de matières sèches selon l'une quelconque des revendications précédentes,
**caractérisé en ce que**
a) le composé de matières sèches comprend une proportion totale de 2 à 10 % en masse, de préférence de 2 à 6 % en masse, de deuxième phosphate,
et/ou
b) la proportion totale de P₂O₅ résultant du deuxième phosphate dans le composé de matières sèches, déterminée par analyse de fluorescence X selon DIN EN ISO 12677, est de 1,0 à 6,0 % en masse, de préférence de 1,2 à 3,0 % en masse.

7. Composé de matières sèches selon l'une quelconque des revendications précédentes,
**caractérisé en ce que**
les deux phosphates comprennent une masse volumique apparente selon DIN ISO 697:1984-01 de 200 à 1400 g/l, de préférence de 400 à 900 g/l.

8. Composé de matières sèches selon l'une quelconque des revendications précédentes,
**caractérisé en ce que**
a) le matériau granulaire Al₂O₃ est constitué d'au moins une matière première riche en alumine ayant une teneur en Al₂O₃ de ≥ 40 % en masse, de préférence de ≥ 90 % en masse, de manière particulièrement préférée de ≥ 95 % en masse,
et/ou
b) le matériau granulaire Al₂O₃ est constitué d'alumine, de préférence de corindon fondu, de préférence de corindon noble, et/ou d'alumine calcinée, par exemple d'alumine réactive, et/ou de corindon fritté, de préférence d'alumine tabulaire, et/ou de bauxite frittée, et/ou de spinelle et/ou de mullite et/ou de chamotte.

9. Composé de matières sèches selon l'une quelconque des revendications précédentes,
**caractérisé en ce que**
a) le composé de matières sèches comprend une proportion totale de 15 à 50 % en masse, de préférence de 25 à 40 % en masse, de matériau granulaire Al₂O₃ farineux,
et/ou
b) l'agrégat à grains grossiers et à grains fins comprend une proportion de grains fins avec une taille de grain ≤ 1 mm et > 200 µm et une proportion de grains grossiers avec une taille de grain > 1 mm.

10. Composé de matières sèches selon l'une quelconque des revendications précédentes,
**caractérisé en ce que**
a) l'agrégat est constitué d'au moins 40 % en masse, de préférence d'au moins 90 % en masse, de préférence de 100 % en masse d'agrégats d'alumine et/ou d'aluminosilicates,
et/ou
b) l'agrégat est constitué d'au moins 80 % en masse, de préférence d'au moins 90 % en masse, de préférence de 100 % en mass d'agrégats d'alumine.

11. Composé de matières sèches selon l'une quelconque des revendications précédentes,
**caractérisé en ce que**
a) le liant sec est un liant hydraulique, de préférence un ciment d'aluminate de calcium, et/ou du silicate de soude et/ou un liant d'hydroxyde d'aluminium et/ou un liant géopolymère et/ou un liant phosphate,
et/ou
b) le composé de matières sèches comprend un autre agent anticorrosion exempt de phosphate, de préférence du sulfate de baryum et/ou un agent anticorrosion contenant du fluorure, de préférence du fluorure de calcium et/ou du fluorure de strontium et/ou du fluorure d'aluminium et/ou un agent anticorrosion constitué d'une phase stable d'aluminate de calcium, comme par exemple de CA, CA₂ ou CA₆,
et/ou
c) le composé de matières sèches comprend au moins un liquéfacteur.

12. Mélange de béton réfractaire pour la fabrication d'un produit non basique, réfractaire, non cuit, moulé ou non moulé, en particulier pour un revêtement de travail ou une maçonnerie arrière d'un four industriel de grand volume de l'industrie de l'aluminium ou pour un revêtement de travail d'un système de transport par gouttière ou d'un récipient de transport mobile de l'industrie de l'aluminium pour le transport d'aluminium liquide ou d'un alliage d'aluminium liquide, comprenant:
a) un composé de matières sèches selon l'une quelconque des revendications précédentes, et
b) additif au composé de matières sèches, au moins un liant liquide sous forme jointe.

13. Mélange du béton réfractaire selon la revendication 12,
**caractérisé en ce que**
a) le mélange comprend une teneur totale en P₂O₅, déterminée par analyse de fluorescence X selon DIN EN ISO 12677:2013-2, de 2 à 10 % en masse, de préférence de 4 à 6 % en masse, par rapport à la masse sèche totale du mélange,
et/ou
b) le mélange est un mélange de béton réfractaire liquéfié,
et/ou
c) le liant liquide est un sol de silice et/ou un sol d'alumine et/ou un liant organique et/ou un liant de phosphate.

14. Utilisation d'un mélange comprenant un composé de matières sèches selon l'une quelconque des revendications 1 à 11, de préférence d'un mélange de béton réfractaire selon la revendication 12 ou 13, pour la fabrication d'un produit en céramique grossière, réfractaire, non cuit, moulé ou non moulé, non basique, en particulier d'un produit pour un revêtement de travail ou une maçonnerie arrière d'un four industriel à grand volume de l'industrie de l'aluminium ou pour un revêtement de travail d'un système de transport par gouttière ou d'un récipient de transport mobile de l'industrie de l'aluminium pour le transport d'aluminium liquide ou d'un alliage d'aluminium liquide.

15. Utilisation selon la revendication 14,
**caractérisé en ce que**
le mélange, en particulier le mélange de béton réfractaire, est utilisé pour la fabrication d'un élément de construction préfabriqué.

16. Procédé de fabrication d'un produit en céramique grossière, réfractaire, non cuit, moulé ou non moulé, non basique, en particulier pour un revêtement de travail ou une maçonnerie arrière d'un four industriel à grand volume de l'industrie de l'aluminium,
**caractérisé en ce que**
le produit est fabriqué à partir d'un mélange comprenant un composé de matières sèches selon l'une quelconque des revendications 1 à 11, de préférence à partir d'un mélange de béton réfractaire selon la revendication 12 ou 13.

17. Revêtement d'un four industriel, de préférence un four de fusion ou un four de coulée ou un four de maintien à température, ou d'un système de transport par gouttière stationnaire ou d'un récipient de transport mobile pour l'industrie de l'aluminium primaire ou secondaire,
**caractérisé en ce que**
le revêtement comprend au moins un produit, de préférence un élément de construction préfabriqué, qui est fabriqué à partir d'un mélange comprenant un composé de matières sèches selon l'une des revendications 1 à 11, de préférence à partir d'un mélange de béton réfractaire selon la revendication 12 ou 13.

18. Revêtement selon la revendication 17,
**caractérisé en ce que**
le revêtement comprend un revêtement de travail comprenant ledit au moins un produit réfractaire,
le revêtement de travail étant de préférence intégré dans une maçonnerie monocouche ou multicouche.

19. Revêtement selon la revendication 17 ou 18,
**caractérisé en ce que**
le revêtement comprend une maçonnerie arrière isolante qui comprend le au moins un produit réfractaire.

20. Revêtement selon l'une des revendications 17 à 19,
**caractérisé en ce que**
le revêtement est disposée dans la zone du bain, dans la zone de la rampe ou dans la zone du brûleur du four industriel.

21. Four industriel pour l'industrie de l'aluminium primaire ou secondaire, de préférence four de fusion ou four de coulée ou four de maintien de la température,
**caractérisé en ce que**
le four industriel comprend un revêtement selon l'une des revendications 17 à 20.

22. Four industriel selon la revendication 21,
**caractérisé en ce que**
le four de fusion est un four à tambour rotatif, par exemple un four à tambour rotatif basculant, un four de fusion à cuve, un four à induction, par exemple un four à induction à gouttière, ou un four à chambre unique ou un four multichambres.

23. Système de transport par gouttière stationnaire pour l'industrie de l'aluminium primaire ou secondaire pour le transport d'aluminium liquide ou d'un alliage d'aluminium liquide,
**caractérisé en ce que**
le système de transport par gouttière comprend un revêtement selon l'une des revendications 17 à 19.

24. Récipient de transport mobile pour l'industrie de l'aluminium primaire ou secondaire pour le transport d'aluminium liquide ou d'un alliage d'aluminium liquide,
**caractérisé en ce que**
le récipient de transport comprend un revêtement selon l'une des revendications 17 à 19.
